# EUROPEAN PATENT APPLICATION

(11) **EP 1 052 826 A2**
(43) Date of publication of application: **15.11.2000**
(21) Application number: 00303878.3
(22) Date of filing: 09.05.2000
(51) Int. Cl.: H04L 29/06, H04L 12/28

(54) **System and method for communication between a portable terminal and a server**

(30) Priority: 11.05.1999 JP 13052999
(71) Applicant: Sony Computer Entertainment Inc., Tokyo 107-0052 (JP)
(72) Inventor: Hamanaka, Takashi, Sugar & Rockets Inc., Nakano-ku, Tokyo 164-0011 (JP)
(74) Representative: Horner, David Richard

(57) **Abstract**

A communication system (10) has a network (12), a server (14) connected to the network (12), a computer (16) capable of accessing the server (14) via the network (12), and a portable information terminal (18) capable of performing wireless communication with the computer (16). The portable information terminal (18) and the server (14) are capable of communicating with each other via the computer (16). When the portable information terminal (18) and the server (14) communicate with each other to download a desired program and data from the server (14) into the portable information terminal (18), for example, a main memory (20) of the computer (16) is used as a data buffer.

## Description

### BACKGROUND OF THE INVENTION

The present invention relates to a communication system and a communication method which are preferably applicable to a portable information terminal with a display unit, such as a portable telephone set, a PHS (Personal Handy-phone System) terminal, a portable game machine, or a PDA (Personal Digital Assistant), a recording medium storing a program for carrying out the communication method, and a program itself.

Recently, portable information terminals which have a flat display panel such as a liquid crystal display panel, such as PDAs (Personal Digital Assistants), portable computers, electronic notepads, portable telephone sets, PHS (Personal Handy-phone System) terminals, pagers, or the like have widely been used in the art.

Such a portable information terminal may be connected to a notebook-type personal computer or a stationary computer for data transfer to and from the computer.

Entertainment apparatus for downloading a program from a mass storage medium such as a CD-ROM or an optical disk and executing a game according to the downloaded program, or playing back music based on data from a CD, have also been in widespread use.

There have commercially been available portable information terminals that can detachably be connected to such entertainment apparatus for downloading a program via the entertainment apparatus and executing a game according to the downloaded program by themselves.

According to one possible mode of use of such a portable information terminal in the future, the user downloads a desired program from a Web site, i.e., a Web server having a home page, into the portable information terminal, and uses the downloaded program on the portable information terminal.

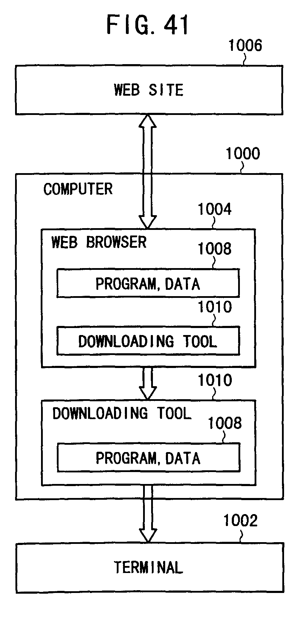

FIG. 41 of the accompanying drawings illustrates a process of achieving such a possible mode of use of such a portable information terminal. As shown in FIG. 41, a notebook-type personal computer 1000 (hereinafter referred to as "computer 1000") and a portable information terminal 1002 are connected for communication with each other by a wire or wireless link.

The computer 1000 then activates a Web browser 1004 to search for a certain Web site 1006 via the Internet, downloads a desired program and data 1008 from the Web site 1006, and then downloads a tool program (downloading tool) 1010 for downloading the program and data 1008 into another device, e.g., the portable information terminal 1002.

When the downloading tool 1010 is activated on the computer 1000, the downloading tool 1010 downloads the program and data 1008, which have been downloaded from the Web site 1006 Into the computer 1000, into the portable information terminal 1002.

In order to use the downloading tool 1010 downloaded from the Web site 1006 as a new tool on the computer 1000, it is necessary to write the downloading tool 1010 in a hard disk of the computer 1000.

The computer 1000 needs to perform the following processing sequence: The computer 1000 writes the program and data 1008 transmitted from the Web site 1006 into a main memory or a hard disk, writes the downloading tool 1010 transmitted from the Web site 1006 into the hard disk, and activates the downloading tool 1010 to transmit the program and data 1008 to the portable information terminal 1002. Therefore, the time required for the computer 1000 to perform the processing sequence tends to be long. The hard disk has to have an area large enough to write the downloading tool 1010 therein.

Some downloading tools 1010 transmit the program and data 1008 as a document other than an HTML (Hypertext Markup Language) document. If the program and data 1008 are transmitted as a document other than an HTML document, then it is liable to be difficult to change the design of a menu image, for example, displayed on the display panel of the portable information terminal 1002.

If the downloading tool 1010 malfunctions or its version is updated, then it needs to be redistributed. However, the process of redistributing the downloading tool 1010 is time-consuming.

If the downloading tool 1010 operates on a single OS (Operating System), then it would be meaningless to download the downloading tool 1010 into a computer 1000 which runs another OS. Consequently, the downloading tool 1010 which operates on a single OS is dependent on the type of the computer 1000.

It is therefore an object of the present invention to provide a communication system and a communication method which can greatly reduce a processing time and improve a user interface required when a desired program and data are downloaded from a server on a network via a personal computer into a portable information terminal, a recording medium storing a program for easily carrying out the communication method, and a program itself.

### SUMMARY OF THE INVENTION

The present invention preferably provides a communication system and a communication method which are capable of downloading a desired program and data from a server on a network via a personal computer into a portable information terminal, without the need for a program redistribution and also without depending on the type of the personal computer, a recording medium storing a program for easily carrying out the communication method, and a program itself.

A communication system according to the present invention has a network, a server connected to the network, a computer capable of accessing the server via the network, and a portable information terminal capable of performing wireless communication with the computer, the portable information terminal and the server being capable of communicating with each other via the computer.

According to the present invention, there is also provided a method of performing communications between a portable information terminal capable of performing wireless communication with a computer and a server connected to a network, via the computer.

For downloading a desired program and data from the server via the computer into the portable information terminal, it has heretofore been customary to download a downloading tool into the computer and then use the downloading tool to download the desired program and data downloaded from the server into the portable information terminal.

According to the present invention, however, since the portable information terminal and the server are capable of communicating with each other via the computer, the computer simply functions as a data buffer or a data converter, making the communication process equivalent to downloading the desired program and data from the server directly into the portable information terminal.

Therefore, any process of writing a downloading tool from the server into a hard disk, for example, of the computer is not required, and it is not necessary to activate a downloading tool to download a desired program and data into the portable information terminal. Consequently, the period of time required to download a desired program and data from the Web site into the portable information terminal is greatly reduced.

It is also not required to reserve an area in the hard disk to write a downloading tool therein.

Inasmuch as a desired program and data are downloaded from the server directly into the portable information terminal, the portable information terminal of preferred embodiments can receive the desired program and data as an HTML document, which makes it possible to easily change the design of a menu image, for example, displayed on a display unit of the portable information terminal. As a result, the user interface can be improved.

Heretofore, if the downloading tool malfunctions or its version is updated, then it needs to be redistributed. According to the present invention, however, such drawbacks are completely eliminated because no downloading tool needs to be downloaded into the computer.

Moreover, as the computer only functions as a data buffer or a data converter for communications, the downloading of a desired program and data does not depend on the OS of the computer, and hence the dependency of the downloading on the computer type is eliminated.

The network may comprise the Internet, and the server may comprise a Web site. The portable information terminal and the computer may communicate with each other via a wireless communication, for example an infrared radiation.

The computer may have a main memory, and the portable information terminal and the server may communicate with each other using the main memory as a data buffer.

The communication system may further comprise an entertainment apparatus capable of executing a plurality of programs, and the portable information terminal may have communication processing means for processing communications, downloaded via the entertainment apparatus.

In accordance with one embodiment, the communication processing means may have user information processing means for registering user information stored in a memory of the portable information terminal in a database managed by the server and/or retrieving user information from the database. The server may have a database with a plurality of programs registered therein, and the communication processing means may have program loading means for downloading a program from the programs registered in the database. The server may have a database with individual addresses established therein, and the communication processing means may have electronic mail service processing means for exchanging electronic mail with the individual addresses established in the database.

The entertainment apparatus may further have terminal utility processing means for downloading at least the communication processing means recorded in a recording medium into the portable information terminal.

In one embodiment, the computer may have communication preparing means for preparing communications between the portable information terminal and the server. The computer may have a main memory, and the communication preparing means may comprise means for reserving a memory area for communications in the main memory.

According to another aspect of the present invention, a recording medium is provided which stores a program for performing communications between a portable information terminal capable of performing wireless communication with a computer and a server connected to a network, via the computer.

When the recording medium is used in a communication system or a communication method, the period of time required to download a desired program and data from the server via the computer into the portable information terminal is greatly reduced, and the user interface can be improved.

No program redistribution is needed, and a desired program and data can be downloaded from the server connected to the network via the computer into the portable information terminal, without depending on the type of the computer.

The program may be arranged to allow the network to comprise the Internet, and the server to comprise a Web site.

The program may be arranged to allow the portable information terminal and the computer to communicate with each other via any suitable wireless communication, for example an infrared radiation.

The computer may have a main memory, and the program may be arranged to allow the portable information terminal and the server to communicate with each other using the main memory as a data buffer.

The program may include communication processing means for processing the communications which can be downloaded into the portable information terminal via an entertainment apparatus.

The communication processing means may include a process of registering user information stored in a memory of the portable information terminal in a database managed by the server and/or retrieving user information from the database. The communication processing means may include a process of downloading a program from a plurality of programs registered in a database of the server. The communication processing means may include a process of exchanging electronic mail with individual addresses established in a database of the server.

The program may be arranged to allow the computer to prepare communications between the portable information terminal and the server. The computer may prepare communications between the portable information terminal and the server by reserving a memory area for communications in a main memory of the computer.

The above and other objects, features, and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 is a block diagram of a communication system according to an embodiment of the present invention;
FIG. 2 is a block diagram illustrating a downloading process carried out by the communication system according to an embodiment of the present invention;
FIG. 3 is a perspective view of an entertainment system incorporating the communication system according to an embodiment of the present invention;
FIG. 4 is a plan view of a portable information terminal which is one of the components of the communication system according to an embodiment of the present invention;
FIG. 5 is a perspective view of the portable information terminal;
FIG. 6 is a perspective view of the portable information terminal with a lid being open;
FIG. 7 is a front elevational view of the portable information terminal with the lid open;
FIG. 8 is a block diagram of a circuit arrangement of an entertainment apparatus;
FIG. 9 is a block diagram of a circuit arrangement of the portable information terminal;
FIG. 10 is a block diagram of functions of software for implementing the communication system according to an embodiment of the present invention;
FIG. 11 is a functional block diagram of a terminal utility processing means operating on the entertainment apparatus;
FIGS. 12 and 13 are a flowchart of a processing sequence of the terminal utility processing means;
FIG. 14 is a functional block diagram of a communication preparation processing means operating on a computer;
FIGS. 15 and 16 are a flowchart of a processing sequence of the communication preparation processing means;
FIG. 17 is a flowchart of a processing sequence of a data transmission/reception processing means operating on a computer;
FIG. 18 is a functional block diagram of an ID check processing means operating on a Web site;
FIG. 19 is a flowchart of a processing sequence of the ID check processing means;
FIG. 20 is a functional block diagram of a communication processing means operating on the portable information terminal;
FIGS. 21 and 22 are a flowchart of a processing sequence of the communication processing means;
FIG. 23 is a functional block diagram of a user information processing means operating on the portable information terminal;
FIGS. 24 through 26 are a flowchart of a processing sequence of the user information processing means;
FIG. 27 is a functional block diagram of a user information managing means operating on the Web site;
FIGS. 28 through 30 are a flowchart of a processing sequence of the user information managing means;
FIG. 31 is a functional block diagram of a loading processing means operating on the portable information terminal;
FIG. 32 is a flowchart of a processing sequence of the loading processing means;
FIG. 33 is a functional block diagram of a program managing means operating on the Web site;
FIG. 34 is a flowchart of a processing sequence of the program managing means;
FIG. 35 is a functional block diagram of a mail service processing means operating on the portable information terminal;
FIGS. 36 and 37 are a flowchart of a processing sequence of the mail service processing means;
FIG. 38 is a functional block diagram of an electronic mail managing means operating on the Web site;
FIGS. 39 and 40 are a flowchart of a processing sequence of the electronic mail managing means; and
FIG. 41 is a block diagram illustrating a conventional downloading process.

### DESCRIPTION OF THE PREFERRED EMBODIMENT

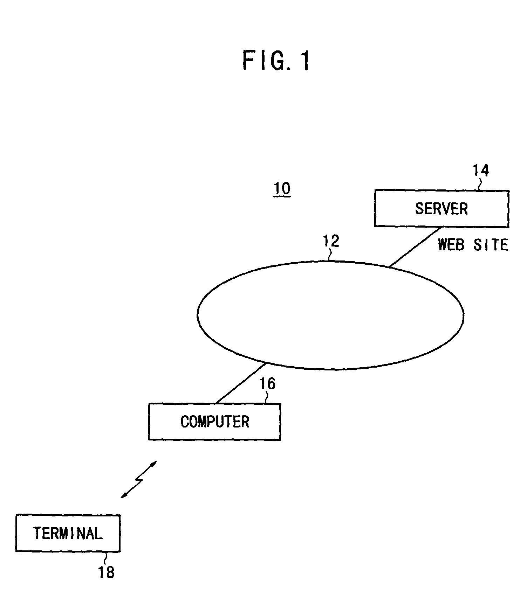

A communication system and a communication method according to an embodiment of the present invention will be described below with reference to FIGS. 1 through 40.

As shown in FIG. 1, a communication system 10 according to an embodiment of the present invention comprises a server 14 connected to a network 12, a computer 16 capable of accessing the server 14 via the network 12, and a portable information terminal 18 capable of performing wireless communication with the computer 16. The portable information terminal 18 and the server 14 can communicate with each other via the computer 16.

In the illustrated embodiment, the network 12 comprises the Internet, and the server 14 comprises a Web site, i.e., a Web server having a home page. The user who is connected to the Internet 12 can browse information of the Internet 12 in a hypertext format via the WWW (World Wide Web). The server 14 will hereinafter referred to as a Web site 14.

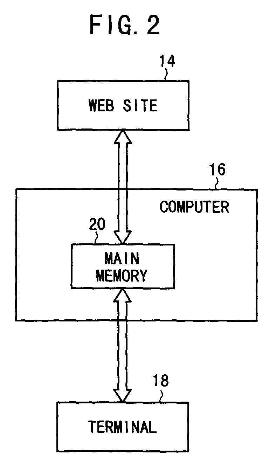

As shown in FIG. 2, when the portable information terminal 18 and the Web site 14 communicate with each other, e.g., when a desired program and data are downloaded from the Web site 14 into the portable information terminal 18, a main memory 20 of the computer 16 is used as a data buffer.

Specifically, when the portable information terminal 18 and the Web site 14 communicate with each other, the computer 16 simply functions as a data buffer or a data converter, making the communication process equivalent to downloading the desired program and data from the Web site 14 directly into the portable information terminal 18. In the communication between portable information terminal 18 and the Web site 14, applets of JAVA (a programming language developed by Sun Microsystems and a registered trademark of Sun Microsystems) may be used.

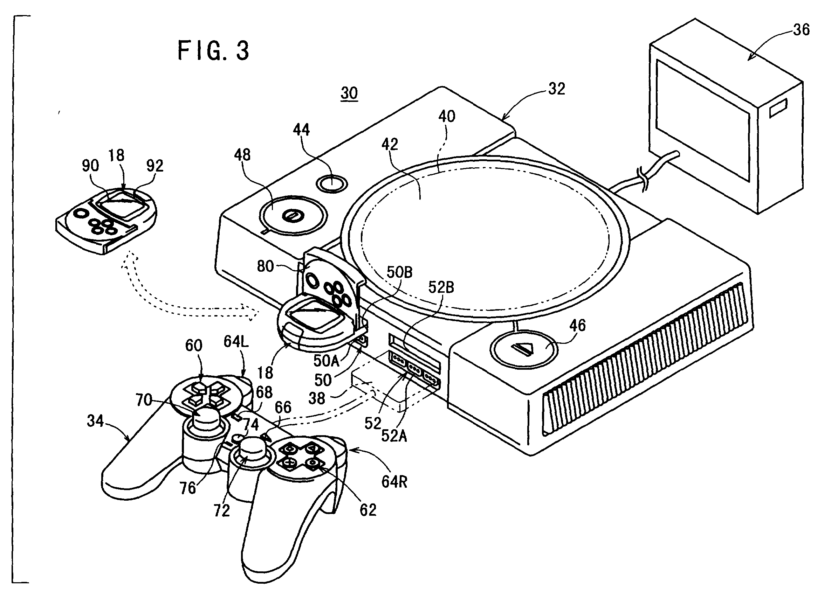

Details of the communication system 10 will be described below with reference to FIGS. 3 through 9. The portable information terminal 18 used in the communication system 10 is one of the components of an entertainment system 30 shown in FIG. 3.

As shown in FIG. 3, the entertainment system 30 includes an entertainment apparatus 32 which serves as a master unit for the portable information terminal 18, the portable information terminal 18 detachably connected to the entertainment apparatus 32, a manual controller 34 detachably connected to the entertainment apparatus 32 by a connector 38, and a display monitor 36 such as a television receiver which is supplied with video and audio output signals from the entertainment apparatus 32.

The entertainment apparatus 32 can read a program recorded in a mass storage medium such as an optical disk 40 such as a CD-ROM, for example, and execute a game, for example, based on the program depending on commands supplied from the user, e.g., the game player. The execution of the game mainly represents controlling the progress of the game by controlling the display of images and the generation of sounds on the display monitor 36 in response to input signals from the manual controller 34.

The entertainment apparatus 32 is essentially in the shape of a flat rectangular parallelepiped, and has a disk loading unit 42 disposed centrally therein for loading an optical disk 40 storing an application program and data of a video game or the like, a reset switch 44 for resetting a program which is being executed at present, a disk control switch 46 for controlling the loading of the optical disk 40, a power supply switch 48, and two slot 50, 52, for example.

The entertainment apparatus 32 may be supplied with the application program via a communication link, rather than being supplied from the optical disk 40 as the recording medium.

The slots 50, 52 have respective upper slot units 50B, 52B and respective lower slot units 50A, 52A. Manual controllers 34 can be connected respectively to the lower slot units 50A, 52A. Memory cards (not sown) or portable information terminals 18 which also function as memory cards can be connected to respectively to the upper slot units 50B, 52B. The slots 50 (50A, 50B) and the slots 52 (52A, 52B) are of asymmetrical shapes to avoid erroneous insertion of manual controllers and memory cards or portable information terminals.

The manual controller 34 has first and second control pads 60, 62, an L (Left) button 64L, an R (Right) button 64R, a start button 66, and a selection button 68. The manual controller 34 also has first and second swivel control members 70, 72 for making analog control actions, a mode selection switch 74 for selecting control modes of the swivel control members 70, 72, and an indicator 76 for indicating a selected control mode.

As shown in FIG. 3, the portable information terminal 18 with a lid 80 being open is connected to the entertainment apparatus 32. A program and data are downloaded from the entertainment apparatus 32 into the portable information terminal 18 which is connected to the entertainment apparatus 32. In this sense, the entertainment apparatus 32 is considered to be a downloading apparatus.

When the portable information terminal 18 is disconnected from the entertainment apparatus 32, stated otherwise, when the portable information terminal 18 is a stand-alone system, the portable information terminal 18 can be operated on a build-in battery to execute a program downloaded from the entertainment apparatus 32.

Portable information terminals 18 can be used as inherent memory cards corresponding to a plurality of manual controllers 34 connected to the entertainment apparatus 32. For example, if two users (game players) take part in playing a game on the entertainment system 30, game results of the users are recorded respectively in the portable information terminals 18.

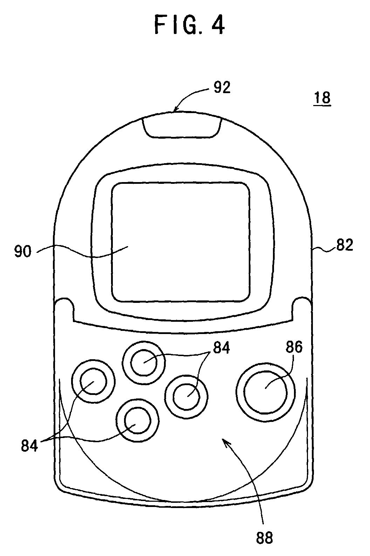

As shown in FIGS. 4 through 7, the portable information terminal 18 has a housing 82 which supports a manual control pad 88 having a plurality of direction buttons 84 and a decision button 86 for entering events and making various selections, a display unit 90 comprising a liquid crystal display (LCD) unit or the like, and a window 92 for wireless communication via infrared radiation or the like.

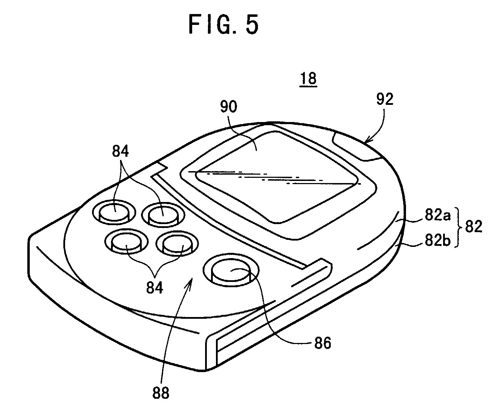

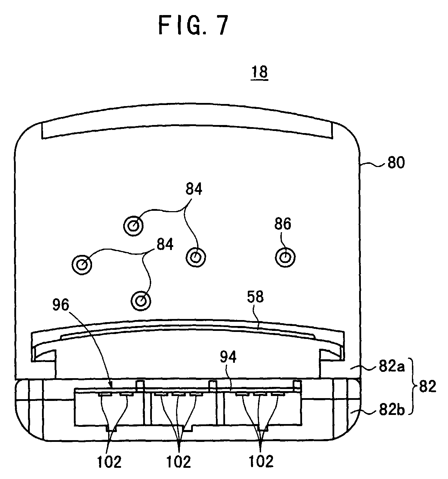

As shown in FIG. 5, the housing 82 comprises an upper shell 82a and a lower shell 82b. The housing 82 houses a board 94 which supports a memory device, etc. thereon, as shown in FIG. 7. The housing 82 can be inserted into either one of the slots 50, 52 of the entertainment apparatus 82, and has a connector 96 disposed in an end thereof and having a elongate rectangular window.

The window 92 is disposed on an opposite end of the housing 82 which is of a substantially semicircular shape. The display unit 90 occupies a substantially half area of the upper shell 82a and is positioned near the window 92.

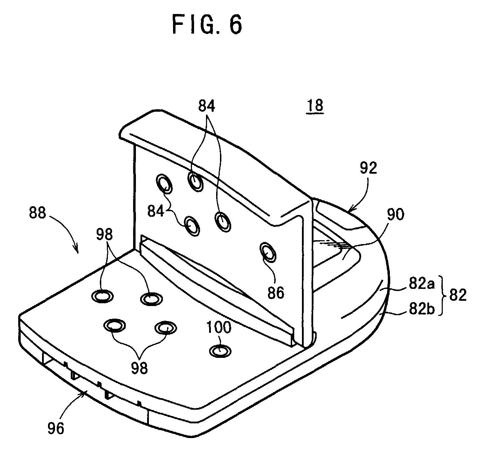

The manual control pad 88 occupies another substantially half area of the upper shell 82a and is positioned remotely from the window 92. As shown in FIG. 6, the manual control pad 88 comprises a substantially square lid 80 that is angularly movably supported on the housing 82 and supports thereon the direction buttons 84 and the decision button 86, and switch pressers 98, 100 positioned in an area of the housing 82 which can be opened and closed by the lid 80.

The direction buttons 84 and the decision button 86 extend through the lid 80. The direction buttons 84 and the decision button 86 are supported on the lid 80 for movement into and out of the upper surface of the lid 80.

The switch pressers 98, 100 have respective pressing elements supported on the housing 82 for movement into and out of the upper surface of the housing 82. When one of the pressing elements is pressed from above, it presses a corresponding pressure switch such as a diaphragm switch, for example, mounted on the board 94 in the housing 82.

With the lid 80 closed, the switch pressers 98, 100 are held in vertical alignment with the direction buttons 84 and the decision button 86, respectively. Therefore, while the lid 80 is being closed over the housing 82, when the direction buttons 84 and the decision button 86 are pressed from above into the upper surface of the lid 80, the direction buttons 84 and the decision button 86 cause the pressing elements of the corresponding switch pressers 98, 100 to press corresponding pressure switches in the housing 82.

As shown in FIG. 7, power and signal terminals 102 are mounted on the board 94 and disposed in the window of the connector 96. The connector 96 has a shape and dimensions that are identical to those of ordinary memory cards for use with the entertainment apparatus 32.

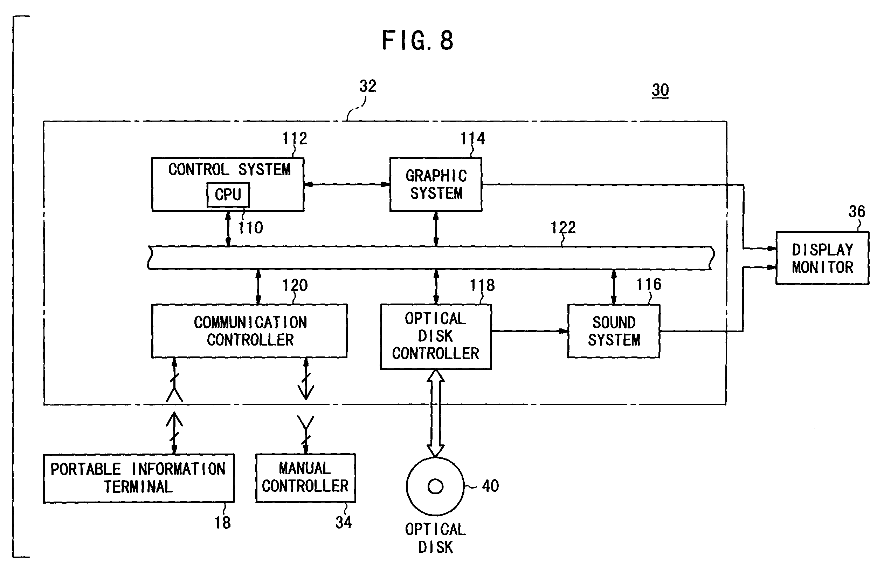

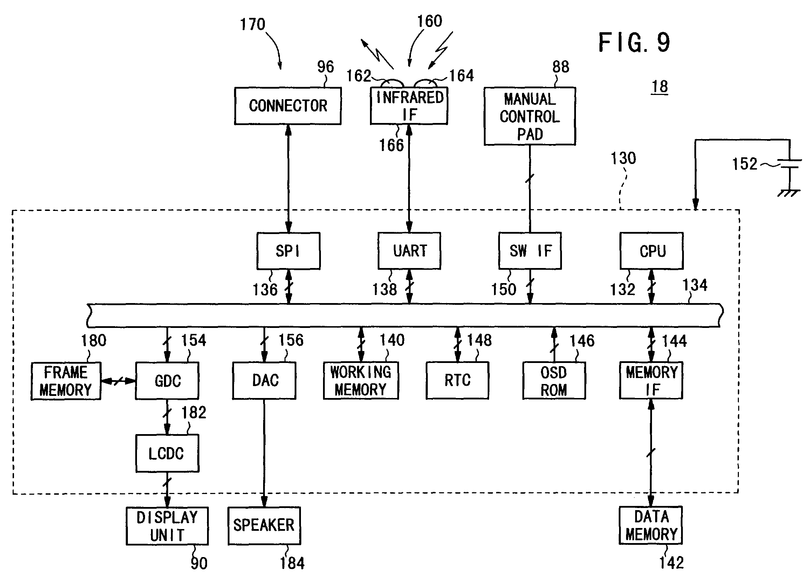

Circuit arrangements of the entertainment apparatus 32 and the portable information terminal 18 will be described below with reference to FIGS. 8 and 9.

As shown in FIG. 8, the entertainment apparatus 32 comprises a control system 112 including a central processing unit (CPU) 110 and peripheral devices thereof, a graphic system 114 including a frame buffer and a graphic processing unit (GPU) for rendering image data in the frame buffer, a sound system 116 including a sound processing unit (SPU) for generating music sounds and sound effects, an optical disk controller 118 for controlling the readout of the optical disk 40 in which application programs and data are stored, a communication controller 120 for controlling the inputting of data into and outputting of data from the manual controller 34, the portable information terminal 18, or the memory card (not shown), and a system bus 122 to which the control system 112, the graphic system 114, the sound system 116, the optical disk controller 118, and the communication controller 120 are connected.

Video and audio signals generated by and outputted from the graphic system 114 and the sound system 116 are supplied to the display monitor 36 to display images on the display screen of the display monitor 36 and reproduce sounds from the speakers of the display monitor 36.

As shown in FIG. 9, the portable information terminal 18 has a controller 130 comprising a microcomputer or the like. The controller 130 has a CPU 132 for controlling the entire system of the portable information terminal 18 via a system bus 134.

To the system bus 134, there are connected, in addition to the CPU 132, a serial-parallel interface (SPI) 136 for communication with the entertainment apparatus 32, and a UART (Universal Asynchronous Receiver Transmitter) 138 which is an interface for asynchronous data transfer.

To the system bus 134, there are also connected a working memory 140 comprising an SRAM for temporarily storing data and processed results required for processing by the CPU 132, and a data memory (data storage memory) 142 as an external storage means via a memory interface 144.

To the system bus 134, there are also connected a ROM (OSDROM) 146 comprising a flash memory and having an OSD (On Screen Display) function, and a real-time clock (RTC) 148 having a calendar and clock function. The OSDROM 146 stores a control program such as kernel.

The manual control pad 88 is connected to the system bus 134 via a switch interface (SWIF) 150 which also functions as an interrupt generating means.

The system bus 134 is supplied with electric energy from a battery 152. When the portable information terminal 18 is disconnected from, i.e., independent of, the entertainment apparatus 32, the portable information terminal 18 can execute application software stored in the data memory 142. The contents of the data memory 142 are backed up by its nonvolatile memory capability even when the power supply of the portable information terminal 18 is turned off.

To the system bus 134, there are also connected a GDC (Graphic Display Controller) 154 as an image processing means, and a DAC (Digital-to-Analog Converter) 156 for converting a digital signal supplied from the system bus 134 into an analog signal.

The portable information terminal 18 has two communication routes, i.e., a first communication route 160 and a second communication route 170, for receiving data from and outputting data to external devices.

The first communication route 160 comprises an infrared interface 166 which is a module according to IrDA (Infrared Data Association) having an infrared-emitting diode 162 and an infrared-detecting diode 164, and the UART 138. Infrared signals are received from and outputted to external devices via the infrared interface 166, converted from parallel into serial signals or from serial into parallel signals by the UART 138, and supplied to and outputted from the system bus 134.

The second communication route 170 comprises the connector (physical connector) 96 for making a physical connection, and the serial-parallel interface (SPI) 136. As described above, as shown in FIG. 3, the connector 96 is mounted in either one of terminal insertion units (upper slot units 50B, 52B) of the slots 50, 52 of the entertainment apparatus 32, supplies serial data of information from the entertainment apparatus 32, e.g., information read from the optical disk 40 (including application software of a game) to the SPI 136, which converts the serial data into parallel data and supplies the parallel data to the system bus 134.

An image is displayed on the display screen of the display unit 90 of the portable information terminal 18 as follows: The GDC 154 as the image processing means exchanges data with a frame memory 180 connected thereto, and controls an LCDC (Liquid Crystal Display Controller) 182, which is a controller for the liquid crystal display unit, to display an image on the display screen of the display unit 90.

Sound (including music sound) is outputted from a speaker 184 as a sound outputting means as follows: The DAC 156 for converting a digital signal into an analog signal receives digital sound data from the system bus 134, converts the digital sound data into analog sound data, and supplies the analog sound data to the speaker 184, which radiates corresponding sound.

The computer 16 (see FIGS. 1 and 2) may comprise a notebook-type personal computer or a desktop-type personal computer, for example, and should preferably have an infrared interface capable of transmitting and receiving infrared signals, and a UART which is an asynchronous data transfer interface.

The Web site 14 comprises a server which comprises a personal computer and a plurality of databases connected to the server.

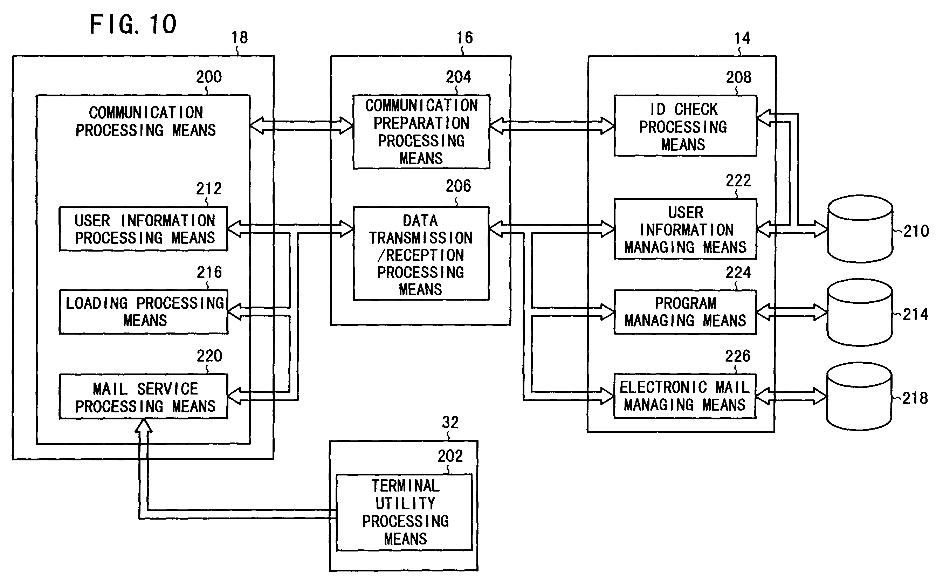

Software for implementing the communication system 10 according to the present invention will be described below with reference to FIGS. 10 through 40. The software which will be described below is by way of example only, and various other forms of software can be used insofar as they are capable of performing communications between the Web site 14 and the portable information terminal 18.

As shown in FIG. 10, the software for implementing the communication system 10 has a communication processing means 200 downloaded via the entertainment apparatus 32 into the portable information terminal 18 and operating on the portable information terminal 18, and a terminal utility processing means 202 operating on the entertainment apparatus 32 for downloading at least the communication processing means 200 recorded in the optical disk 40 into the portable information terminal 18.

The software also has a communication preparation processing means 204 operating on the computer 16 for preparing communications between the portable information terminal 18 and the Web site 14, a data transmission/reception processing means 206 operating on the computer 16 for performing communications between the portable information terminal 18 and the Web site 14, and an ID check processing means 208 operating on the Web site 14 for checking the ID of a user who has requested access, against a group of contracted IDs and allowing only an authorized user to gain access.

The communication processing means 200 operating on the portable information terminal 18 has a user information processing means 212 for registering user information stored in the data memory 142 of the portable information terminal 18 in a customer management database 210 managed by the Web site 14 and retrieving user information from the customer management database 210, a loading processing means 216 for downloading an arbitrary program among various programs registered in a program management database 214 of the Web site 14, and a mail service processing means 220 for exchanging electronic mail with individual addresses established in an electronic mail management database 218 of the Web site 14.

The Web site 14 has a user information managing means 222 for managing user information in the customer management database 210, a program managing means 224 for transmitting various programs (programs for video games, etc.) from the program management database 214 to users who have requested such programs, and an electronic mail managing means 226 for managing electronic mail in the electronic mail management database 218.

An arrangement and processing sequence of the terminal utility processing means 202 operating on the entertainment apparatus 32 will be described below.

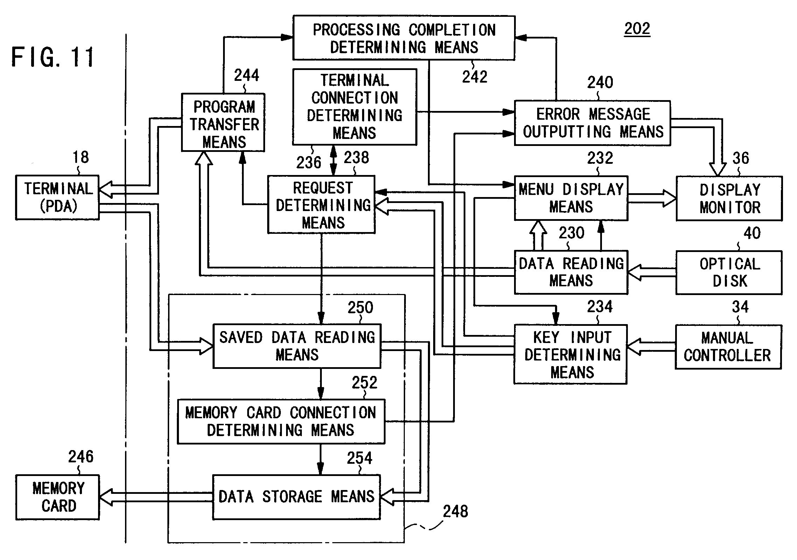

As shown in FIG. 11, the terminal utility processing means 202 has a data reading means 230 for reading data (including a menu) relative to utilities from the optical disk 40, a menu display means 232 for displaying a read menu on the display monitor 36, a key input determining means 234 for receiving control data supplied from the manual controller 34 and storing the data into a main memory (not shown), and a terminal connection determining means 236 for determining a connected state of the portable information terminal 18 to the entertainment apparatus 32.

The terminal utility processing means 202 also has a request determining means 238 for determining an inputted request, an error message outputting means 240 for outputting an error message depending on the type of an error, a processing completion determining means 242 for determining an end request for ending a program, a program transfer means 244 for transferring an ID and the communication processing means 200 which have been read from the optical disk 40 via the data reading means 230 to the portable information terminal 18, and a data saving processing means 248 for reading data to be saved from the portable information terminal 18 and storing the data in a memory card 246 connected to the entertainment apparatus 32.

The data saving processing means 248 comprises a saved data reading means 250 for reading data to be saved from the portable information terminal 18, a memory card connection determining means 252 for determining a connected state of the memory card 246 to the entertainment apparatus 32, and a data storage means 254 for storing read data to be saved into an indicated block of the memory card 246.

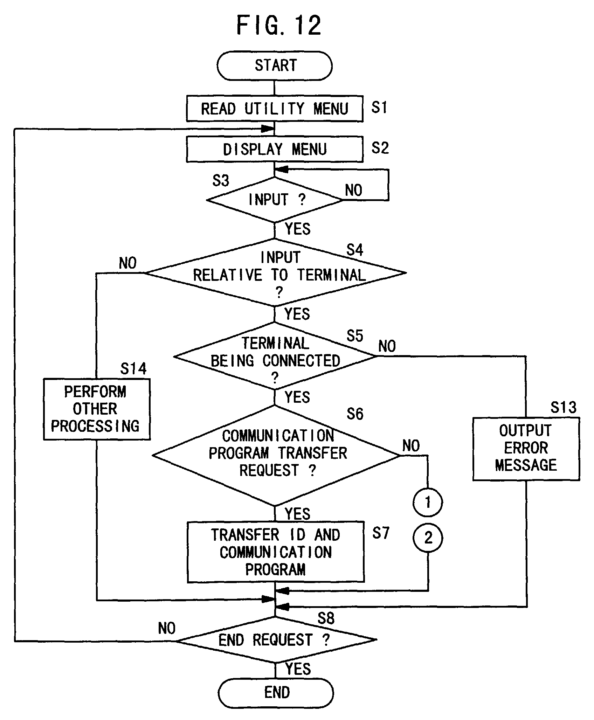

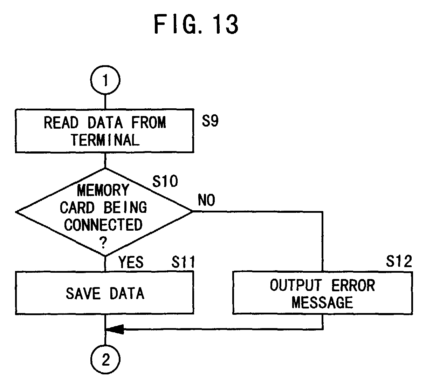

FIGS. 12 and 13 show a processing sequence of the terminal utility processing means 202.

In step S1 shown in FIG. 12, the data reading means 230 reads menu image data for utility processing from the optical disk 40.

In step S2, the menu display means 232 outputs the read menu image data to the display monitor 36 to display a menu image on the display monitor 36.

In step S3, the key input determining means 234 waits for an input of control data from the manual controller 34. If control data is inputted, then control proceeds to step S4 in which the request determining means 238 determines whether the inputted control data represents a request relative to a terminal or not.

If the inputted control data represents a request relative to a terminal, then the terminal connection determining means 236 determines whether the portable information terminal 18 is presently connected to the entertainment apparatus 32 or not in step S5.

If the portable information terminal 18 is presently connected to the entertainment apparatus 32, then the request determining means 238 determines whether the control data represents a transfer request for the communication processing means 200 or not in step S6.

If the control data represents a transfer request for the communication processing means 200, then control goes to step S7 in which the data reading means 230 reads the communication processing means 200 from the optical disk 40 and the program transfer means 244 transfers the communication processing means 200 to the portable information terminal 18.

In step S8, the processing completion determining means 242 determines whether there is a request for ending the processing in the terminal utility processing means 202 or not. If there is no request for ending the processing in the terminal utility processing means 202, then control returns to step S2 to display the menu, after which the inputting of next control data is awaited.

If the control data represents a data saving request in step S6, then the saved data reading means 250 of the data saving processing means 248 reads data to be saved from the portable information terminal 18 in step S9 shown in FIG. 13. Thereafter, the memory card connection determining means 252 determines whether the memory card 246 is presently connected to the entertainment apparatus 32 or not in step S10.

If the memory card 246 is presently connected to the entertainment apparatus 32, then control goes to next step S11 in which the data storage means 254 stores the read data to be saved into an indicated block of the memory card 246.

If the memory card 246 is not presently connected to the entertainment apparatus 32 in step S10, then control goes to step S12 in which the error message outputting means 240 outputs error message data corresponding to the present error to the display monitor 36, which displays an error message such as "CONNECT MEMORY CARD", for example, on the display screen thereof.

If the portable information terminal 18 is not presently connected to the entertainment apparatus 32 in step S5 (FIG. 12), then control goes to step S13 in which the error message outputting means 240 outputs error message data to the display monitor 36, which displays an error message such as "CONNECT PORTABLE INFORMATION TERMINAL", for example, on the display screen thereof.

If the inputted control data does not represent a request relative to a terminal in step S4, then control goes to step S14 in which processing depending on the inputted control data is carried out.

If there is a request for ending the processing in the terminal utility processing means 202 in step S8, then the processing in the terminal utility processing means 202 is ended.

An arrangement and processing sequence of the communication preparation processing means 204 operating on the computer 16 will be described below.

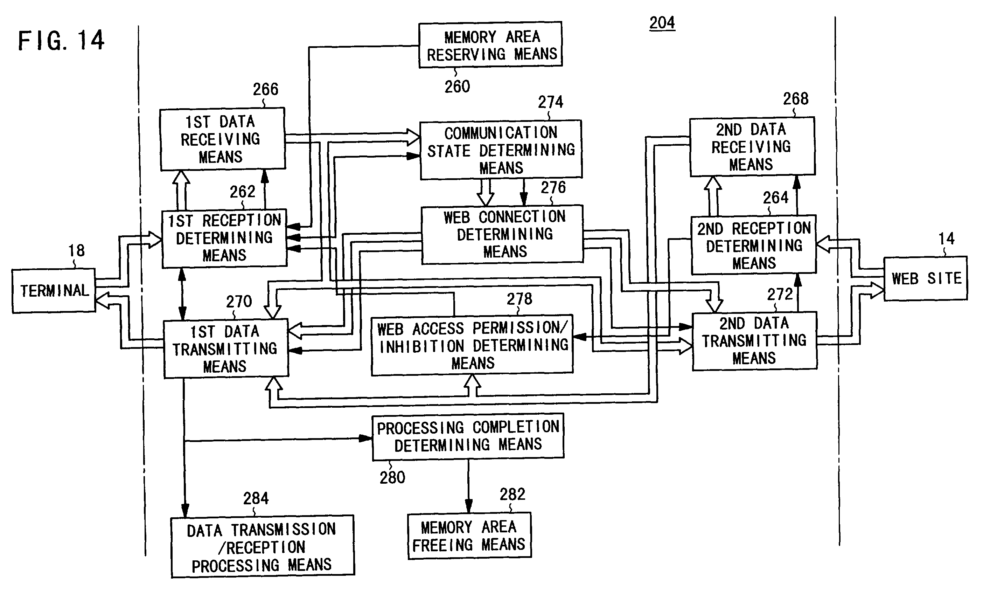

As shown in FIG. 14, the communication preparation processing means 204 has a memory area reserving means 260 for reserving an area necessary to exchange communication data in the main memory 20 (see FIG. 2) and declaring to the OS the inhibition of another program from accessing the reserved area, a first reception determining means 262 for determining whether transmitted data from the portable information terminal 18 has been sent to the computer 16 or not, a second reception determining means 264 for determining whether transmitted data from the Web site 14 has been sent to the computer 16 or not, a first data receiving means 266 for receiving transmitted data from the portable information terminal 18 and storing the transmitted data in the reserved memory area, and a second data receiving means 268 for receiving transmitted data from the Web site 14 and storing the transmitted data in the reserved memory area.

The communication preparation processing means 204 also has a first data transmitting means 270 for transmitting generated data to the portable information terminal 18, a second data transmitting means 272 for transmitting generated data to the Web site 14, a communication state determining means 274 for determining a communication state between the computer 16 and the portable information terminal 18 based on the transmitted data from the portable information terminal 18, a Web connection determining means 276 for determining whether the computer 16 is connected to the Web site 14 via a Web browser or not, a Web access permission/inhibition determining means 278 for determining whether access to the Web site 14 is permitted or inhibited, a processing completion determining means 280 for determining an end request for ending a program, a memory area freeing means 282 for freeing the reserved memory area, and a data transmission/reception processing means 284 activatable when the preparation for communications is finished, for transmitting the received data from the portable information terminal 18 to the Web site 14 and transmitting the received data from the Web site 14 to the portable information terminal 18.

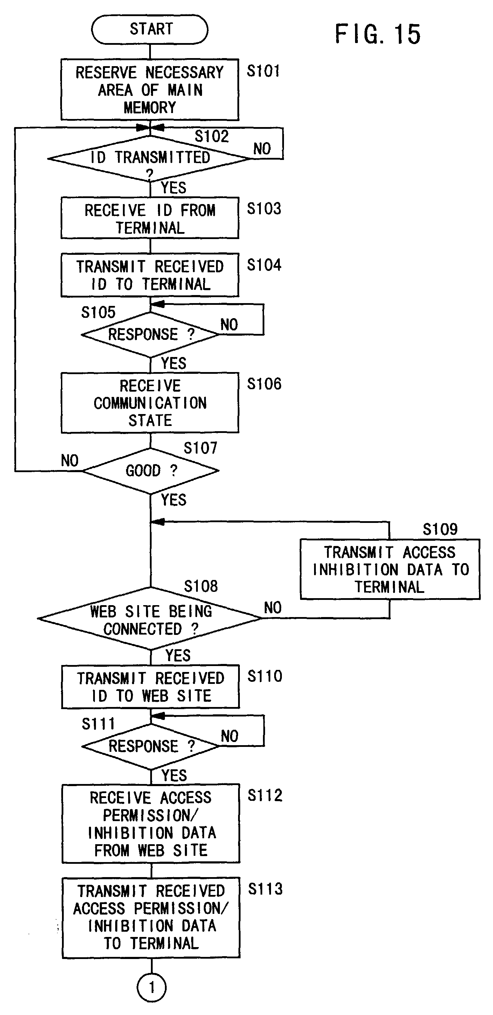

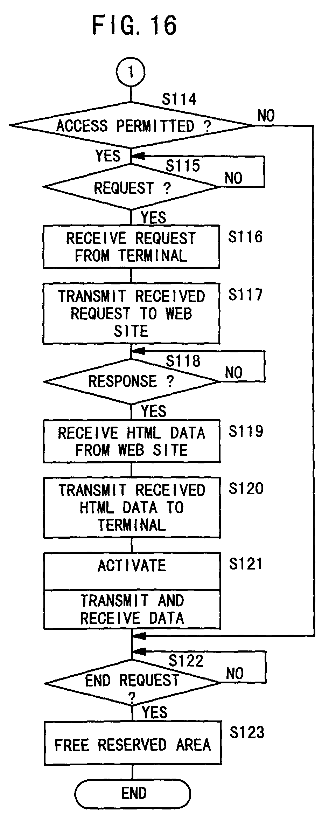

FIGS. 15 and 16 show a processing sequence of the communication preparation processing means 204.

In step S101 shown in FIG. 15, the memory area reserving means 260 reserves an area necessary to exchange communication data in the main memory 20 and declares to the OS the inhibition of another program from accessing the reserved area.

In step S102, the first reception determining means 262 waits for an ID to be transmitted from the portable information terminal 18. If an ID is transmitted, control goes to step S103 in which the first data receiving means 266 receives the ID transmitted from the portable information terminal 18 and stores the transmitted data in the reserved memory area.

In step S104, the first data transmitting means 270 transmits the received ID as it is to the portable information terminal 18. Thereafter, the first reception determining means 262 waits for a response from the portable information terminal 18 in step S105.

If there is a response from the portable information terminal 18, then control goes to step S106 in which the first data receiving means 266 receives information relative to a communication state from the portable information terminal 18.

In step S107, the communication state determining means 274 determines a communication state between the computer 16 and the portable information terminal 18 based on the received information relative to the communication state from the portable information terminal 18.

If the communication state is poor, then control returns to step S102 to resume a test on communications with the portable information terminal 18. If the communication state is good, then control proceeds to step S108 in which the Web connection determining means 276 determines whether the computer 16 is connected to the Web site 14 or not based on a Web connection state flag that is set up by the OS via the Web browser.

If the computer 16 is not connected to the Web site 14, then control goes to step S109 in which the Web connection determining means 276 and the first data transmitting means 270 transmit access inhibition data to the portable information terminal 18. Thereafter, control goes back to step S108 to monitor whether the computer 16 is connected to the Web site 14 or not.

If the computer 16 is connected to the Web site 14 in step S108, control goes to step S110 in which the second data transmitting means 272 transmits the received ID from the portable information terminal 18 to the Web site 14. Thereafter, the second reception determining means 264 waits for a response from the Web site 14 in step S111.

If there is a response from the Web site 14, then control goes to step S112 in which the second data receiving means 268 receives access permission/inhibition data from the Web site 14. In step S113, the first data transmitting means 270 transmits the received access permission/inhibition data to the portable information terminal 18.

In step S114 shown in FIG. 16, the Web access permission/inhibition determining means 278 determines whether the user of the portable information terminal 18 can access the Web site 14 or not, based on the received access permission/inhibition data.

If the user of the portable information terminal 18 can access the Web site 14, then control proceeds to step S115 in which the first reception determining means 262 waits for a request from the portable information terminal 18. If there a request from the portable information terminal 18, then control proceeds to step S116 in which the first data receiving means 266 receives the request from the portable information terminal 18.

In step S117, the second data transmitting means 272 transmits the received request to the Web site 14. Subsequently, the second reception determining means 264 waits for a response from the Web site 14.

If there is a response from the Web site 14, the second data receiving means 268 receives HTML data from the Web site 14 in step S119, and thereafter the first data receiving means 270 transmits the received HTML data to the portable information terminal 18 in step S120.

In step S121, the data transmission/reception processing means 284 is activated. An arrangement and processing sequence of the data transmission/reception processing means 284 will be described later on.

After the processing in step S121 or if the user of the portable information terminal 18 cannot access the Web site 14 in step S114, then control proceeds to step S122 in which the processing completion determining means 280 waits for an end request to end the processing sequence of the communication preparation processing means 204. If there is an end request, then control goes to step S123 in which the memory area freeing means 282 frees the reserved memory area, after which the processing sequence of the communication preparation processing means 204 is ended.

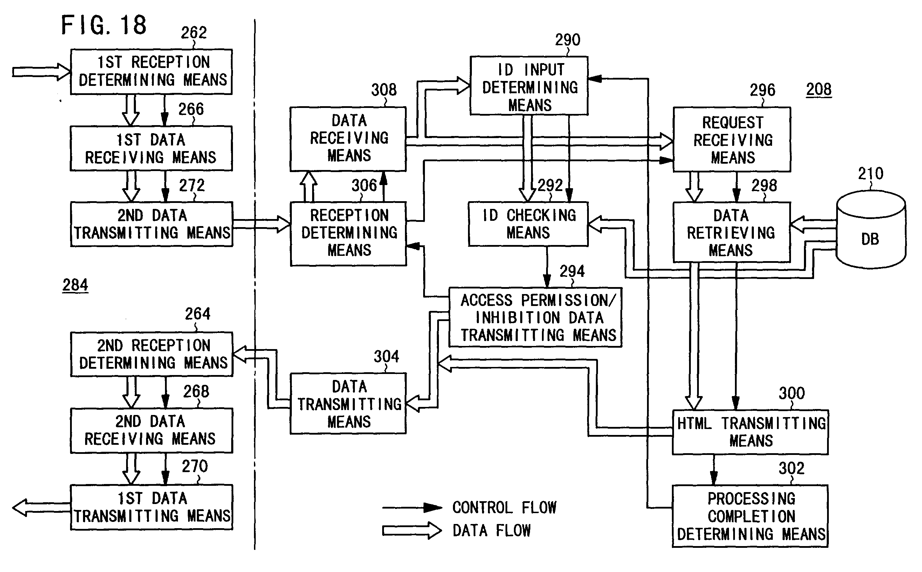

As shown in FIG. 18, the data transmission/ reception processing means 284 has the first reception determining means 262 for determining whether transmitted data from the portable information terminal 18 has been sent to the computer 16 or not, the second reception determining means 264 for determining whether transmitted data from the Web site 14 has been sent to the computer 16 or not, the first data receiving means 266 for receiving transmitted data from the portable information terminal 18 and storing the transmitted data in the reserved memory area, the second data receiving means 268 for receiving transmitted data from the Web site 14 and storing the transmitted data in the reserved memory area, the first data transmitting means 270 for transmitting generated data to the portable information terminal 18, the second data transmitting means 272 for transmitting generated data to the Web site 14, and a processing completion determining means (not shown) for determining an end request for ending a program.

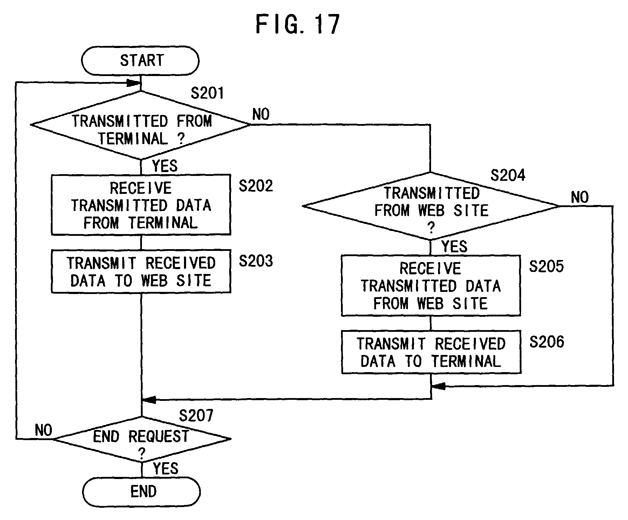

The data transmission/reception processing means 284 performs a processing sequence shown in FIG. 17. In step S201, the first reception determining means 262 determines whether data is transmitted from the portable information terminal 18 to the computer 16 or not. If there is data transmitted from the portable information terminal 18 to the computer 16, then control goes to step S202 in which the first data receiving means 266 receives the transmitted data from the portable information terminal 18 and stores the data in the reserved memory area. In step S203, the second data transmitting means 272 transmits the received data to the Web site 14.

If there is no transmitted from the portable information terminal 18 to the computer 16 in step S201, then control goes to step S204 in which the second reception determining means 264 determines whether data is transmitted from the Web site 14 to the computer 16 or not. If there is data transmitted from the Web site 14 to the computer 16, then control goes to step S205 in which the second data receiving means 268 receives the data from the Web site 14 and stores the data in the reserved memory area. Thereafter, the first data transmitting means 270 transmits the received data to the portable information terminal 18 in step S206.

After the processing in step S203 or step S206 or if there is no data transmitted from the Web site 14 to the computer 16 in step S204, then control goes to step S207 in which the processing completion determining means determines whether there is an end request to end the processing sequence of the data transmission/reception processing means 284. If there is no end request, then control goes back to step S201 for data transmission and reception between the portable information terminal 18 and the Web site 14. If there is an end request, then the processing sequence of the data transmission/reception processing means 284 comes to an end.

An arrangement and processing sequence of the ID check processing means 208 will be described below.

As shown in FIG. 18, the ID check processing means 208 has an ID input determining means 290 for detecting the input of an ID from the portable information terminal 18 which has been transmitted from the computer 16 as a requester, an ID checking means 292 for checking the received ID against a group of contracted IDs registered in the customer management database 210, and an access permission/inhibition data transmitting means 294 for generating access permission or inhibition data (access permission/inhibition data) depending on the result of checking and transmitting the access permission/inhibition data to the requester.

The ID check processing means 208 also has a request receiving means 296 for receiving the request from the portable information terminal 18 which has been transmitted from the computer 16 as the requester and storing the received request in a memory (not shown), a data retrieving means 298 for reading HTML data corresponding to the received request from the portable information terminal 18 from the customer management database 210, an HTML transmitting means 300 for transmitting the read HTML data to the requester, a processing completion determining means 302 for determining an end request for ending a program, a data transmitting means 304 for transmitting generated data to the computer 16 as the requester, a reception determining means 306 for determining whether transmitted data from the computer 16 has been sent to the Web site 14 or not, and a data receiving means 308 for receiving transmitted data from the computer 16 as the requester.

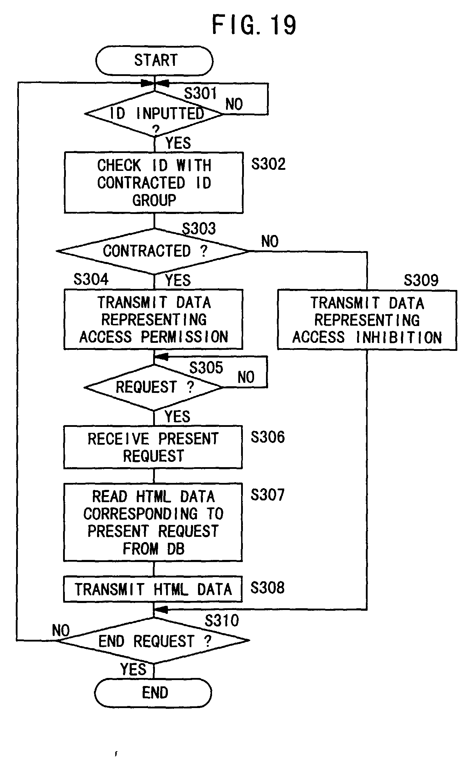

FIG. 19 shows a processing sequence of the ID check processing means 208. In step S301 shown in FIG. 19, the reception determining means 306 and the ID input determining means 290 determine whether an ID from the portable information terminal 18 has been received or not.

If the ID from the portable information terminal 18 has been received, then control goes to step S302 in which the ID checking means 292 checks the received ID against a group of contracted IDs registered in the customer management database 210. In step S303, the ID checking means 292 determines whether the received ID has been contracted or not.

If the received ID has been contracted, then control proceeds to step S304 in which the access permission/inhibition data transmitting means 294 and the data transmitting means 304 transmit data representing access permission to the computer 16 as the requester. The data representing access permission is written into a memory area of the main memory 20 by the data transmission /reception processing means 284 of the computer 16, and thereafter transmitted to the portable information terminal 18. Thereafter, a response from the requester is awaited in step S305.

If a request from the portable information terminal 18 arrives from the computer 16 as the requester at the Web site 14, then control goes to step S306 in which the data receiving means 308 and the request receiving means 296 receive the request from the portable information terminal 18.

In step S307, the data retrieving means 298 reads HTML data (including menu data) corresponding to the request from the customer management database 210. In step S308, the HTML transmitting means 300 and the data transmitting means 304 transmit the read HTML data to the portable information terminal 18 via the computer 16.

If the present ID is judged as being not contracted in step S303, control goes to step S309 in which the access permission/inhibition data transmitting means 294 transmits data representing access inhibition to the portable information terminal 18 via the computer 16.

After the processing in step S308 or S309, control goes to step S310 in which the processing completion determining means 302 determines whether there is an end request for ending the processing in the ID check processing means 208 or not. If there is no end request for ending the processing in the ID check processing means 208, then control returns to step S301 to await the input of a next ID. If there is an end request for ending the processing in the ID check processing means 208, then the processing in the ID check processing means 208 is ended.

An arrangement and processing sequence of the communication processing means 200 operating on the portable information terminal 18 will be described below.

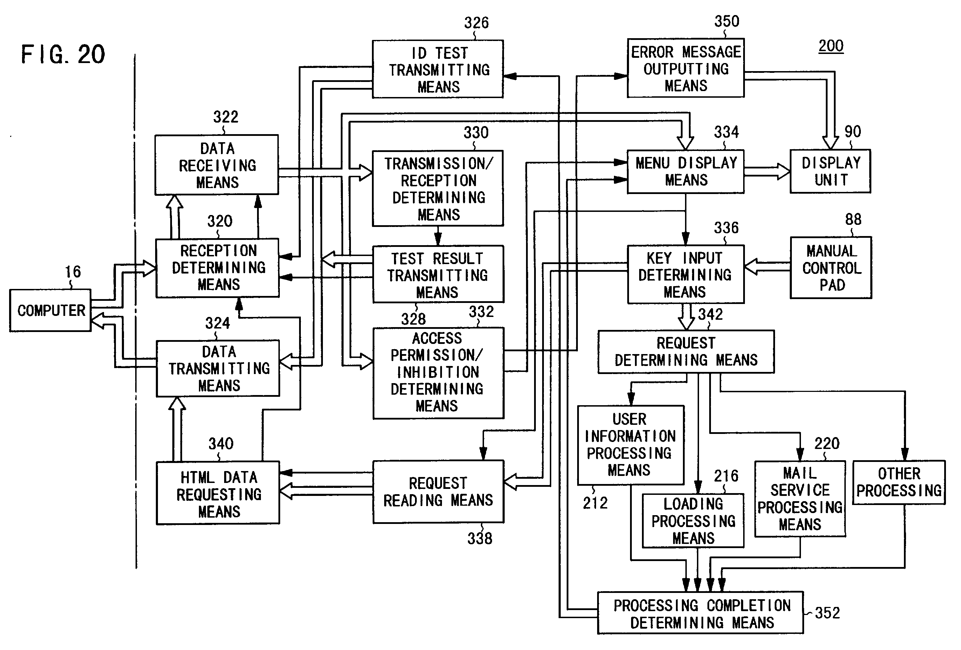

As shown in FIG. 20, the communication processing means 200 has a reception determining means 320 for determining whether transmitted data from the computer 16 has been sent to the portable information terminal 18 or not, a data receiving means 322 for receiving transmitted data from the computer 16, and a data transmitting means 324 for transmitting generated data to the computer 16.

The communication processing means 200 also has an ID test transmitting means 326 for transmitting an ID stored in the data memory 142 (see FIG. 9) of the portable information terminal 18 as a test, a test result transmitting means 328 for transmitting the result of the test of data transmission and reception, a transmission/reception determining means 330 for determining whether data transmission and reception is good or not, an access permission/inhibition determining means 332 for determining whether access to the Web site 14 is permitted or not, a menu display means 334 for displaying a menu on the display unit 90, a key input determining means 336 for detecting an input interrupt to the manual control pad 88 and receiving inputted control data, a request reading means 338 for reading a request (hyperreference) corresponding to the present control data from a hyperreference table, an HTML data requesting means 340 for requesting the transmission of HTML data corresponding to the present request, and a request determining means 342 for determining the request based on the inputted control data.

The communication processing means 200 also has the user information processing means 212 for registering the information (user's score with respect to an arbitrary game, etc.) of the user who uses the portable information terminal 18 in the Web site 14 and retrieving other's information (game score, etc.), the loading processing means 216 for downloading a program (such as of a video game) and data registered in the Web site 14, the mail service processing means 220 for confirming newly arrived mails in the mailbox of the Web site 14 and transmitting mail to a certain party, an error message outputting means 350 for outputting an error message depending on the type of an error to the display unit 90, and a processing completion determining means 352 for determining a request for a menu and an end request for ending a program.

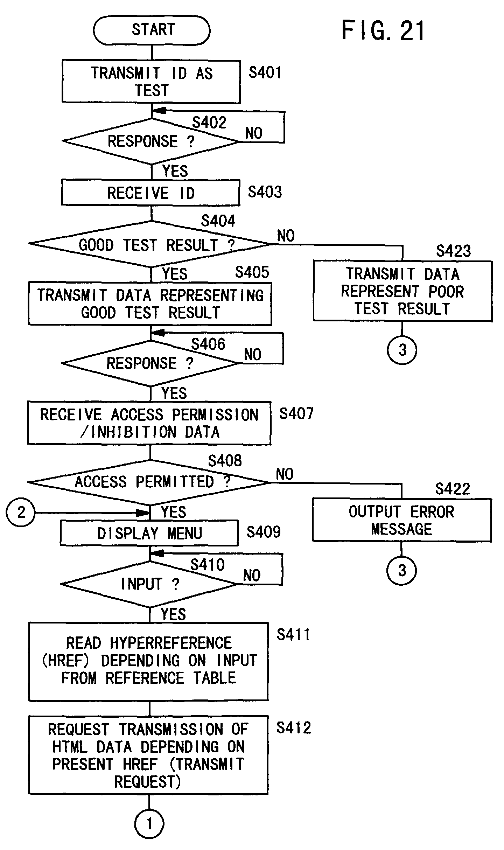

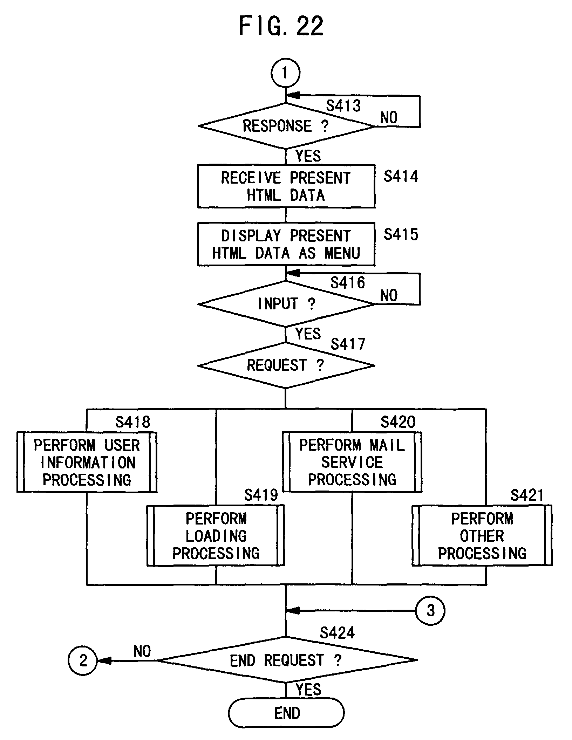

FIGS. 21 and 22 show a processing sequence of the communication processing means 200.

In step S401 shown in FIG. 21, the ID test transmitting means 326 and the data transmitting means 324 read an ID stored in the data memory 142 and transmit the read ID to the computer 16. Thereafter, the reception determining means 320 waits for a response from the computer 16 in step S402.

If there is a response from the computer 16, control proceeds to step S403 in which the data receiving means 322 receives an ID transmitted from the computer 16. In step S404, the transmission/reception determining means 330 checks a data transmission and reception state between the portable information terminal 18 and the computer 16. The transmission/reception determining means 330 checks the data transmission and reception state based on whether the ID transmitted from the computer 16 is the same as the ID stored in the data memory 142 or not. If these IDs are the same as each other, then the transmission/reception determining means 330 determines the data transmission and reception state as good, and control proceeds to step S405.

In step S405, the test result transmitting means 328 and the data transmitting means 324 transmit data representing the good data transmission and reception state to the computer 16. In step S406, the reception determining means 320 awaits for a response from the computer 16.

If there is a response from the computer 16, then control goes to step S407 in which the data receiving means 322 receives data representing access permission or data representing access inhibition from the Web site 14. In step S408, the access permission/inhibition determining means 332 determines whether access to the Web site 14 is permitted or not.

If access to the Web site 14 is permitted, then control proceeds to step S409 in which the menu display means 334 displays a menu relative to communications on the display unit 90. Thereafter, in step S410, the key input determining means 336 awaits for an input of control data from the manual control pad 88.

If control data from the manual control pad 88 is inputted, then control goes to step S411 in which the request reading means 338 reads a hyperreference (HREF) corresponding to the inputted control data from the reference table. Thereafter, in step S412, the HTML data requesting means 340 and the data transmitting means 324 request the transmission of HTML data corresponding to the present HREF, i.e., transmit the present request. Thereafter, the reception determining means 320 awaits for a response from the computer 16 in step S413 shown in FIG. 22.

If there is a response from the computer 16, then control goes to step S414 in which the data receiving means 322 receives HTML data transmitted from the Web site 14 via the computer 16. Then, in step S415, the received HTML data is displayed as a menu on the display unit 90.

In step S416, the key input determining means 336 waits for an input of control data from the manual control pad 88. If control data from the manual control pad 88 is inputted, then control proceeds to step S417 in which the request determining means 342 hands over control to the processing depending on the control data. Specifically, if the control data indicates the processing of user information, the user information processing means 212 performs its own processing in step S418. If the control data represents the loading of an arbitrary program and data, then the loading processing means 216 performs its own processing in step S419. If the control data represents the transmission and reception of electronic mail, then the mail service processing means 220 performs its own processing in step S420. If the control data represents otherwise, then other processing is performed depending on the control data in step S421.

If access to the Web site 14 is inhibited in step S408 shown in FIG. 21, then control goes to step S422 in which the error message outputting means 350 outputs error message data corresponding to the present error to the display unit 90, which displays an error message such as "ACCESS TO WEB SITE NOT PERMITTED", for example, on the display screen thereof.

If the data transmission and reception state is judged as poor in step S404, then control goes to step S423 in which the test result transmitting means 328 and the data transmitting means 324 transmit data representing the poor data transmission and reception state to the computer 16.

After the processing in either one of steps S418 - S421 or the processing in step S422 or step S423, control proceeds to step S424 in which the processing completion determining means 352 determines whether there is an end request for ending the processing in the communication processing means 200 or not. If there is no end request for ending the processing in the communication processing means 200, then control returns to step S409 to display a menu relative to communications again. If there is an end request for ending the processing in the communication processing means 200, then the processing in the communication processing means 200 comes to an end.

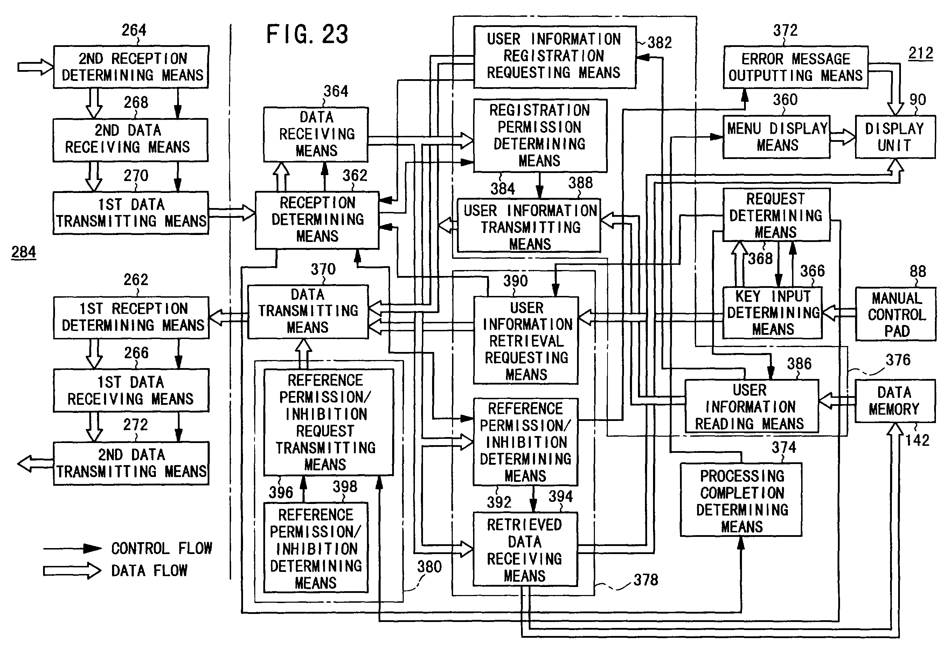

Arrangements and processing sequences of the user information processing means 212, the loading processing means 216, and the mail service processing means 220 of the communication processing means 200, and arrangements and processing sequences of the user information managing means 222, the program managing means 224, and the electronic mail managing means 226 of the Web site 14 will be described below with reference to FIGS. 23 through 40.

As shown in FIG. 23, the user information processing means 212 of the communication processing means 200 has a menu display means 360 for displaying a menu relative to user information processing on the display unit 90, a reception determining means 362 for determining whether transmitted data from the computer 16 has been sent to the portable information terminal 18 or not, a data receiving means 364 for receiving transmitted data from the computer 16 and storing the received data in the working memory (see FIG. 9), and a key input determining means 366 for detecting an input inherent to the manual control pad 88 and receiving inputted control data.

The user information processing means 212 also has a request determining means 368 for determining a request based on inputted control data, a data transmitting means 370 for transmitting generated data to the computer 16, an error message outputting means 372 for outputting an error message depending on the type of an error, and a processing completion determining means 374 for determining an end request for ending a program.

The user information processing means 212 also has a user information registering means 376 for transmitting user information stored in a given area of the data memory 142 via the computer 16 to the Web site 14 in order to register the user information in the customer management database 210 connected to the Web site 14, a user information retrieving means 378 for requesting the retrieval of user information registered in the customer management database 210, and a reference permission/inhibition setting means 380 for establishing a setting as to whether user information may be referred to by another party or not.

The user information registering means 376 has a user information registration requesting means 382 for transmitting a request for user information registration, a registration permission determining means 384 for determining whether the preparation for user information registration has been completed or not, a user information reading means 386 for reading user information (video game score, etc.) stored in the given area of the data memory 142, and a user information transmitting means 388 for transmitting the read user information via the computer 16 to the Web site 14.

The user information retrieving means 378 has a user information retrieval requesting means 390 for transmitting a request for user information retrieval, a reference permission/inhibition determining means 392 for determining whether the reference to requested user information is permitted or not, and a retrieved data receiving means 394 for receiving retrieved data (user information) and displaying the received data on the display unit 90.

The reference permission/inhibition setting means 380 has a reference permission/inhibition request transmitting means 396 for transmitting a reference permission request or a reference inhibition request depending on the request, and a reference permission/inhibition determining means 398 for determining whether reference is permitted or not based on control data from the manual control pad 88.

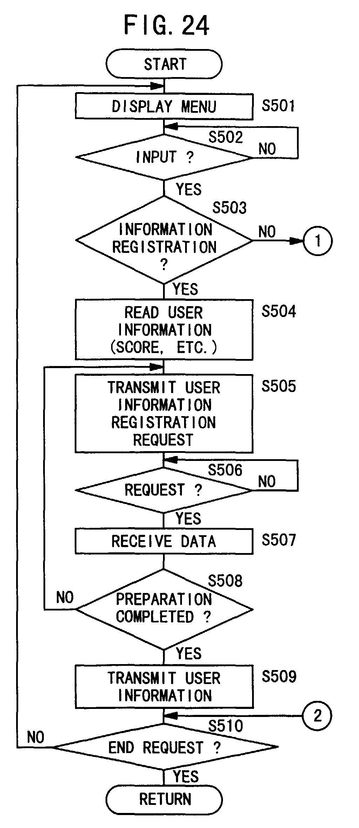

FIGS. 24 through 26 show a processing sequence of the user information processing means 212.

In step S501 shown in FIG. 24, the menu display means 360 displays a menu with respect to the registration and retrieval of user information on the display unit 90. In step S502, the key input determining means 366 waits for an input of control data from the manual control pad 88.

If control data from the manual control pad 88 is inputted, then control goes to step S503 in which the request determining means 368 determines whether the present request of the control data represents the registration of user information or not. If the present request represents the registration of user information, then the user information registering means 376 performs its own processing in step S504 and following steps. First, in step S504, the user information reading means 386 reads user information (video game score, etc.) stored in the given area of the data memory 142.

In step S505, the user information registration requesting means 382 and the data transmitting means 370 transmit a request for user information registration via the computer 16 to the Web site 14. In step S506, the reception determining means 362 awaits a response from the computer 16.

If there is a response from the computer 16, control proceeds to step S507 in which the data receiving means 364 receives data relative to the preparation for user information registration. In step S508, the registration permission determining means 384 determines whether the preparation for user information registration has been completed or not based on the received data.

If the preparation for user information registration has not been completed, then control returns to step S505 in which the user information registration requesting means 382 and the data transmitting means 370 transmit a request for user information registration again to the Web site 14. If the preparation for user information registration has been completed, then control goes to step S509 in which the user information transmitting means 388 and the data transmitting means 370 transmit the read user information via the computer 16 to the Web site 14.

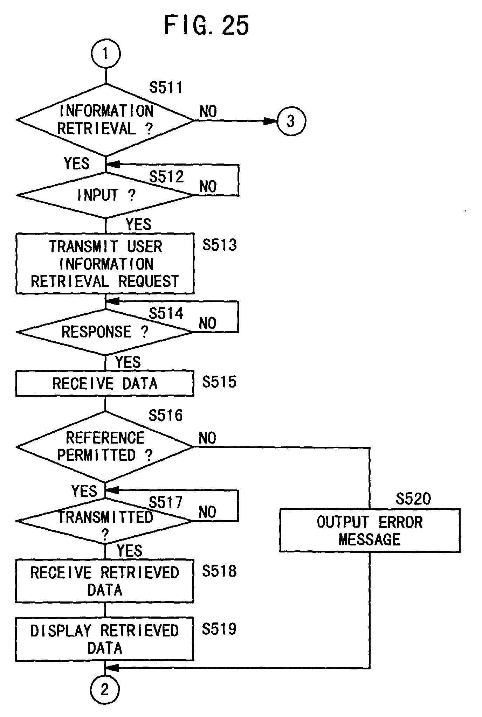

If the present request does not represent the registration of user information in step S503, then control goes to step S511 shown in FIG. 25 in which the request determining means 368 determines whether the present request represents the retrieval of user information or not. If the present request represents the retrieval of user information, then the user information retrieving means 378 performs its own processing in step S512 and following steps. In step S512, the key input determining means 366 waits for an input of control data from the manual control pad 88.

If control data from the manual control pad 88 is inputted, then control goes to step S513 in which the user information retrieval requesting means 390 and the data transmitting means 370 transmit a request for user information retrieval via the computer 16 to the Web site 14. In step S514, the reception determining means 362 awaits a response from the computer 16.

If there is a response from the computer 16, control proceeds to step S515 in which the data receiving means 364 receives data relative to the permission or inhibition of the reference to user information to be retrieved. In step S516, the reference permission/inhibition determining means 392 determines whether the reference to requested user information is permitted or not.

If the reference to requested user information is permitted, then control goes to step S517 in which the transmission of user information from the Web site 14 is awaited. If user information is transmitted, control goes to step S518 in which the data receiving means 364 and the retrieved data receiving means 394 receive the user information from the Web site 14 and store the received user information in a given area of the data memory 142. In step S519, the retrieved user information is displayed on the display unit 90.

If the reference to requested user information is inhibited in step S516, then control goes to step S520 in which the error message outputting means 372 outputs error message data corresponding to the present error to the display unit 90, which displays an error message such as "REQUESTED USER INFORMATION NOT AVAILABLE FOR REFERENCE AS INSTRUCTED BY PARTY CONCERNED", for example, on the display screen thereof.

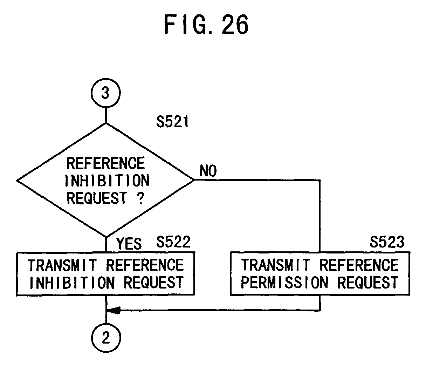

If the present request does not represent the retrieval of user information in step S511, then the reference permission/inhibition setting means 380 performs its own processing in step S521 and following steps shown in FIG. 26. In step S521, the reference permission/inhibition determining means 398 determines whether the present request represents the inhibition of reference to user information or not.

If the present request represents the inhibition of reference to user information, then control proceeds to step S522 in which the reference permission/inhibition request transmitting means 396 and the data transmitting means 370 transmit a reference inhibition request via the computer 16 to the Web site 14. The user information is now made publicly unavailable and cannot be referred to by other parties.

If the present request represents the permission of reference to user information, then control goes to step S523 in which the reference permission/inhibition request transmitting means 396 and the data transmitting means 370 transmit a reference permission request via the computer 16 to the Web site 14. The user information is now made publicly available and can be referred to by other parties.

After the processing in step S509 shown in FIG. 24, or the processing in step S519 or step S520 shown in FIG. 25, or the processing in step S522 or step S523 shown in FIG. 26, control goes to step S510 shown in FIG. 24 in which the processing completion determining means 374 determines whether there is an end request for ending the processing in the user information processing means 212 or not. If there is no end request for ending the processing in the user information processing means 212, then control goes back to step S501 to display a menu relative to the registration and retrieval of user information on the display unit 90 and wait for an input of control data. If there is an end request for ending the processing in the user information processing means 212, then the processing in the user information processing means 212 is ended.

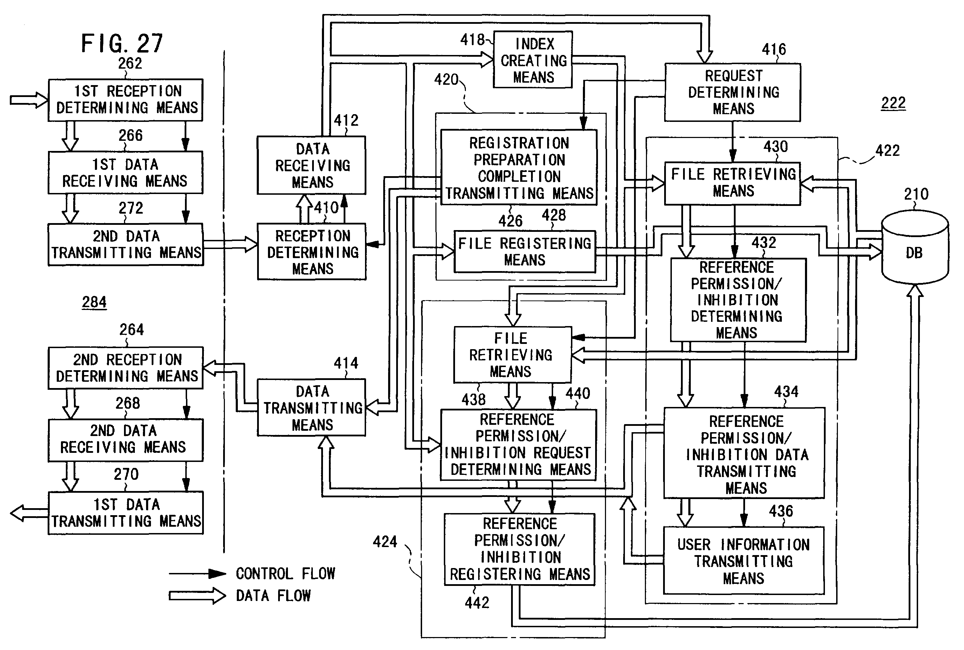

The arrangement and processing sequence of the user information managing means 222 in the Web site 14 will be described below with reference to FIGS. 27 through 30.

As shown in FIG. 27, the user information managing means 222 has a reception determining means 410 for determining whether transmitted data from the computer 16 as a requester has been sent to the Web site 14 or not, a data receiving means 412 for receiving the transmitted data from the computer 16 as the requester and storing the received data in a memory (not shown), a data transmitting means 414 for transmitting generated data to the requester, a request determining means 416 for determining a request based on the transmitted data from the computer 16, an index creating means 418 for creating an index to retrieve a file from the customer management database 210 based on request data from the computer 16, a user information registering means 420 for registering user information requested for registration in the file in the customer management database 210, a user information retrieving means 422 for retrieving user information requested for retrieval from the customer management database 210 and transmitting the retrieved user information to the requester, and a reference permission/ inhibition setting means 424 for establishing a setting as to whether the public availability of the file of a user is permitted or not depending on a request from the user.

The user information registering means 420 has a registration preparation completion transmitting means 426 for transmitting data representing the completion of the preparation for a registration process, and a file registering means 428 for retrieving the corresponding file from the customer management database 210 based on the created index, and registering the user information from the requester in the retrieved file.

The user information retrieving means 422 has a file retrieving means 430 for retrieving the corresponding file from the customer management database 210 based on the created index, a reference permission/inhibition determining means 432 for determining whether requested user information may be made publicly available or not, a reference permission/inhibition data transmitting means 434 for transmitting reference permission data or reference inhibition data registered in the retrieved file, and a user information transmitting means 436 for transmitting the requested user information to the requester if the reference to the user information is permitted.

The reference permission/inhibition setting means 424 has a file retrieving means 438 for retrieving the corresponding file from the customer management database 210 based on the created index, a reference permission/inhibition request determining means 440 for determining whether the public availability of the file is permitted or not based on information representing reference permission or information representing reference inhibition registered in the retrieved file, and a reference permission/inhibition registering means 442 for registering the information representing reference permission or the information representing reference inhibition in the file depending on the request.

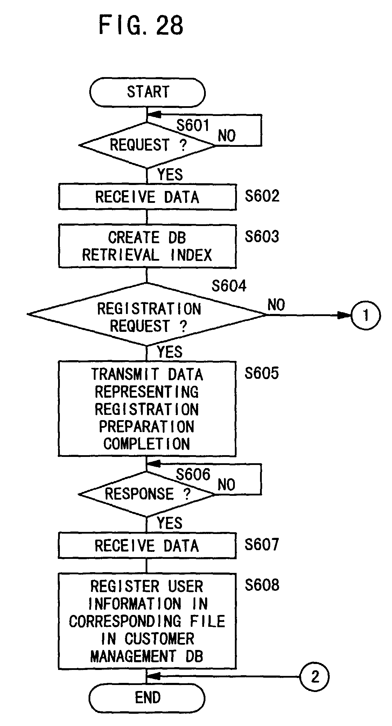

FIGS. 28 through 30 show a processing sequence of the user information managing means 222.

In step S601 shown in FIG. 28, the reception determining means 410 awaits a user registration request or a user information retrieval request from the computer 16 as the requester.

If there is either one of the requests, then control proceeds to step S602 in which the data receiving means 412 receives request data from the requester.

In step S603, the index creating means 418 creates an index for retrieving a file from the customer management database 210 based on the received request data.

In step S604, the request determining means 416 determines the present request based on the received request data. If the request represents user information registration, then the user information registering means 420 performs its own processing. In step S605, the registration preparation completion transmitting means 426 transmits data representing the completion of the preparation for a registration process to the computer 16. In step S606, the reception determining means 410 awaits for a response from the computer 16.

If there is a response from the computer 16, then control goes to step S607 in which the data receiving means 412 receives user information from the requester. In step S608, the file registering means 428 retrieves the corresponding file from the customer management database 210 based on the created index, and registers the user information from the requester in the retrieved file.

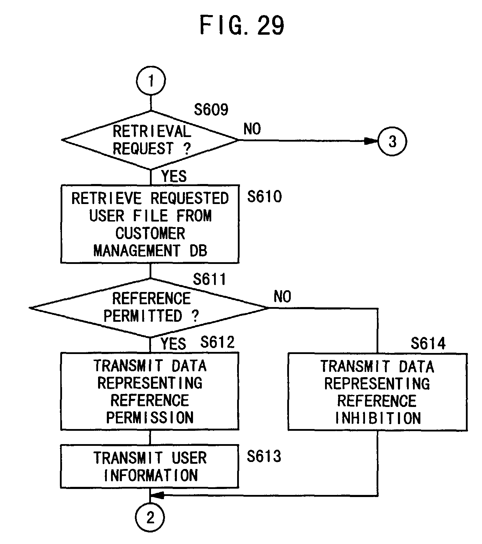

If the request does not represent user information registration, then control goes to step S609 shown in FIG. 29 to determine whether the request represents user information retrieval or not. If the request represents user information retrieval, then the user information retrieving means 422 performs its own processing. In step S610, the file retrieving means 430 retrieves the file that is presently requested from the customer management database 210 based on the created index.

In step S611, the reference permission/inhibition determining means 432 determines whether the retrieved file can be referred to or not based on information representing reference permission or information representing reference inhibition registered in the retrieved file.

If the retrieved file can be referred to, control goes to step S612 in which the reference permission/inhibition data transmitting means 434 and the data transmitting means 414 transmit data representing reference permission to the computer 16. Thereafter, in step S613, the user information transmitting means 436 and the data transmitting means 414 transmit user information registered in the retrieved file to the computer 16.

If the retrieved file cannot be referred to in step S611, then control goes to step S614 in which the reference permission/inhibition data transmitting means 434 and the data transmitting means 414 transmit data representing reference inhibition to the computer 16.

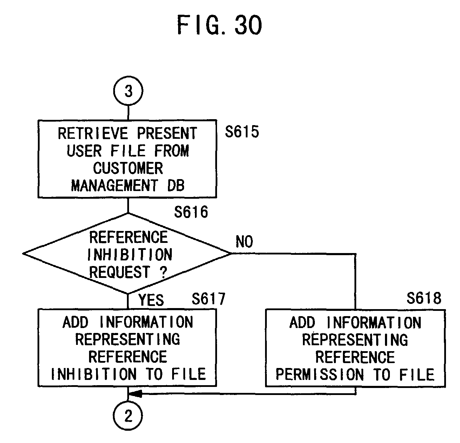

If the request does not represent user information retrieval but a reference permission/inhibition setting, then the reference permission/inhibition setting means 424 performs its processing as shown in FIG. 30. In step S615 shown in FIG. 30, the file retrieving means 438 retrieves the file from the customer management database 210 based on the created index.

In step S616, the reference permission/inhibition request determining means 440 determines whether the present request is a reference inhibition request or not. If the present request is a reference inhibition request, then control goes to step S617 to add data representing reference inhibition to the retrieved file. The file is now inhibited from being accessed by other users.

If the present request is not a reference inhibition request in step S616, but a reference permission request, then control goes to step S618 to add data representing reference permission to the retrieved file. The file is now permitted to be accessed (only read) by other users.

After the processing in step S608 shown in FIG. 28, or the processing in step S613 or step S614 shown in FIG. 29, or the processing in step S617 or step S618 shown in FIG. 30, the processing in the user information managing means 222 is ended.

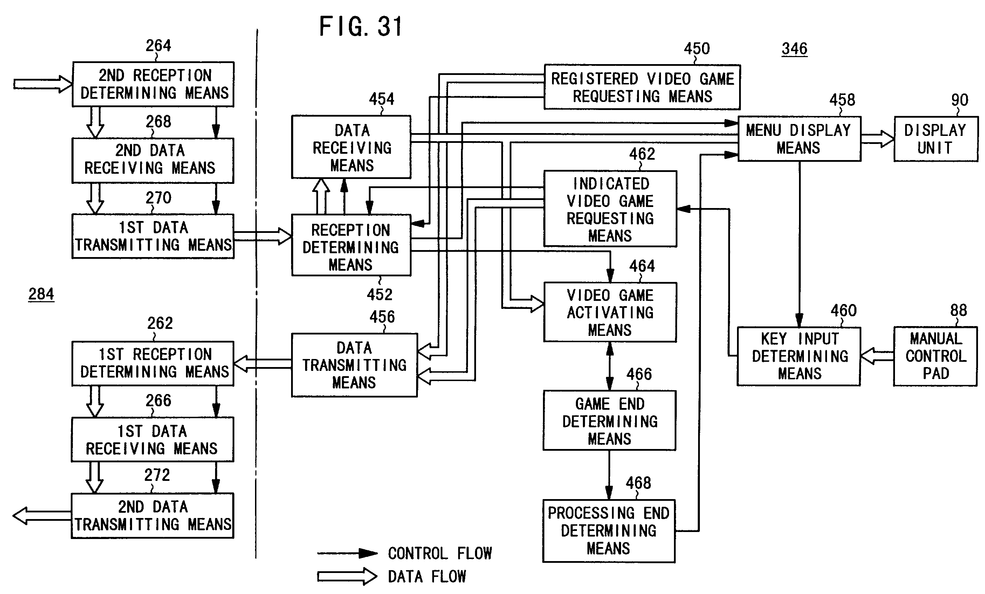

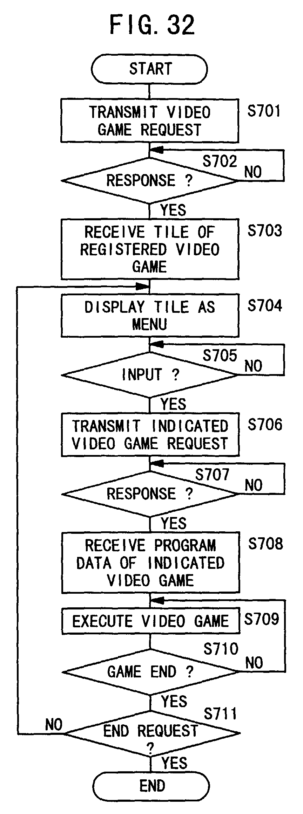

The arrangement and processing sequence of the loading processing means 216 in the communication processing means 200 in the portable information terminal 18 will be described below with reference to FIGS. 31 and 32.

As shown in FIG. 31, the loading processing means 216 has a registered video game requesting means 450 for requesting the transmission of the titles of video games presently registered in the program management database 214, a reception determining means 452 for determining whether transmitted data from the computer 16 has been sent to the portable information terminal 18 or not, a data receiving means 454 for receiving the transmitted data from the computer 16 and storing the received data in the working memory 140, and a data transmitting means 456 for transmitting generated data to the computer 16.

The loading processing means 216 also has a menu display means 458 for displaying the received titles of video games as a menu, a key input determining means 460 for detecting an input interrupt to the manual control pad 88 and receiving inputted control data, an indicated video game requesting means 462 for requesting the transmission of a program relative to an indicated video game to the Web site 14, a video game activating means 464 for receiving program data from the computer 16, storing the received program data in a memory area for program operation, and executing the program, a game end determining means 466 for determining an end of the video game that is being executed, and a processing completion determining means 468 for determining an end request for ending a program.

FIG. 32 shows a processing sequence of the loading processing means 216. In step S701 shown in FIG. 32, the registered video game requesting means 450 requests the Web site 14 to transmit the titles of video games presently registered in the customer management database 214. In step S702, the reception determining means 452 awaits a response from the computer 16.

If there is a response from the computer 16, then control proceeds to step S703 in which the data receiving means 454 receives the titles of registered video games. In step S704, the menu display means 458 displays the received titles of video games as a menu on the display unit 90. Thereafter, the key input determining means 460 awaits an input of control data from the manual control pad 88 in step S705.

If control data from the manual control pad 88 is inputted, then control proceeds to step S706 in which the indicated video game requesting means 462 and the data transmitting means 456 transmits information to request a video game indicated by the control data. Thereafter, the reception determining means 452 awaits a response from the computer 16.

If there is a response from the computer 16, then control proceeds to step S708 in which the data receiving means 454 receives program data of the indicated video game. In step S709, the video game activating means 464 activates the received program of the indicated video game. At this time, the user can enjoy playing the video game on the portable information terminal 18.

In step S710, the game end determining means 466 determines whether the presently executed video game has been ended or not. If the presently executed video game has been ended, then control goes to step S711 in which the processing completion determining means 468 determines whether there is a request to end the processing in the loading processing means 216 or not. If there is no request to end the processing in the loading processing means 216, then control returns to step S704 in which the titles of video games are displayed as a menu on the display unit 90 and an input of control data is awaited. If there is a request to end the processing in the loading processing means 216, then the processing in the loading processing means 216 is ended.

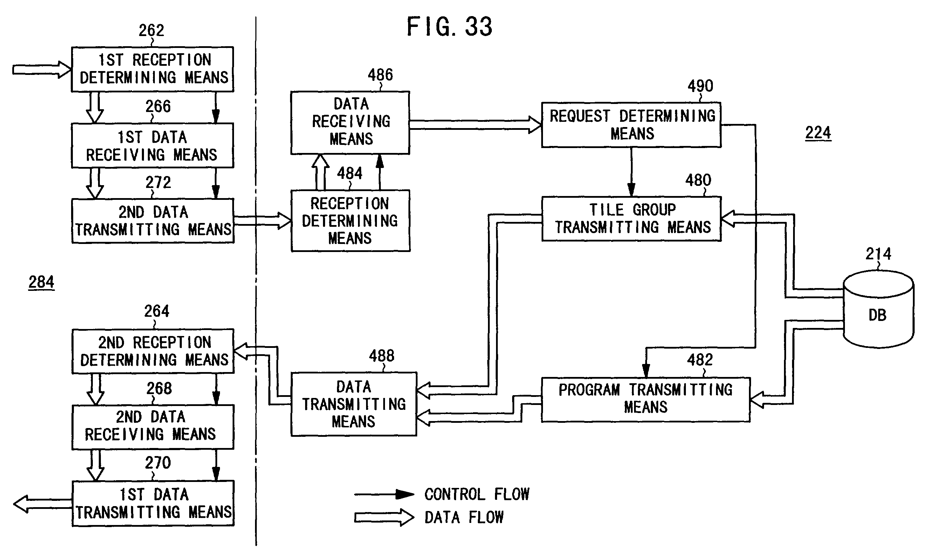

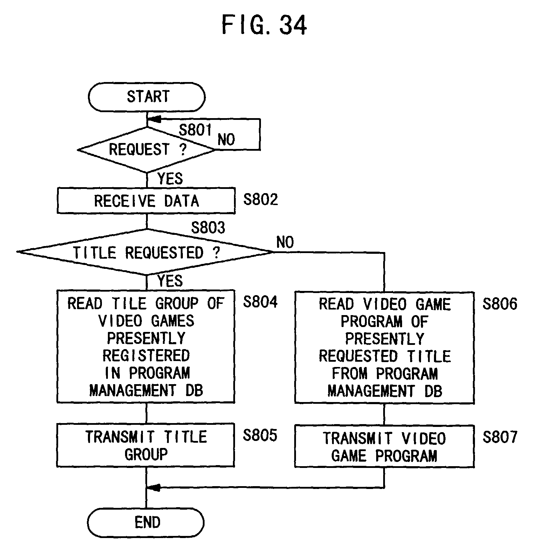

The arrangement and processing sequence of the program managing means 224 in the Web site 14 will be described below with reference to FIGS. 33 and 34.

As shown in FIG. 33, the program managing means 224 has a title group transmitting means 480 for reading a group of video game titles registered in the program management database 214 in response to a video game title transmission request from the computer 16 as a requester, and transmitting the group of video game titles to the requester, a program transmitting means 482 for retrieving a program from the program management database 214 based on request data from the requester and transmitting the retrieved program to the requester, a reception determining means 484 for determining whether transmitted data from the computer 16 as the requester has been sent to the Web site 14 or not, a data receiving means 486 for receiving the transmitted data from the computer 16 and storing the received data in a memory (not shown), a data transmitting means 488 for transmitting generated data to the requester, and a request determining means 490 for determining whether a request from the request represents a title request or a program request.

FIG. 34 shows a processing sequence of the program managing means 224.

In step S801 shown in FIG. 34, the reception determining means 484 awaits a title request or a program request from the computer 16 as the requester.

If there is either one of the requests, then control proceeds to step S802 in which the data receiving means 486 receives request data from the requester.

In step S803, the request determining means 490 determines a present request based on the received request data. If the present request represents a title request, then control goes to step S804 in which the title group transmitting means 480 reads a group of video game titles presently registered in the program management database 214 in response to the title request from the requester. Thereafter, in step S805, the title group transmitting means 480 and the data transmitting means 488 transmit the read title group to the requester.

If the present request represents a program request in step S803, then control proceeds to step S806 in which the program transmitting means 482 retrieves a corresponding program from the programs registered in the program management database 214 based on request data from the requester. Thereafter, in step S807, the program transmitting means 482 and the data transmitting means 488 transmits the retrieved program to the requester.

After the processing in step S805 or step S807, the processing sequence of the program managing means 224 is ended.

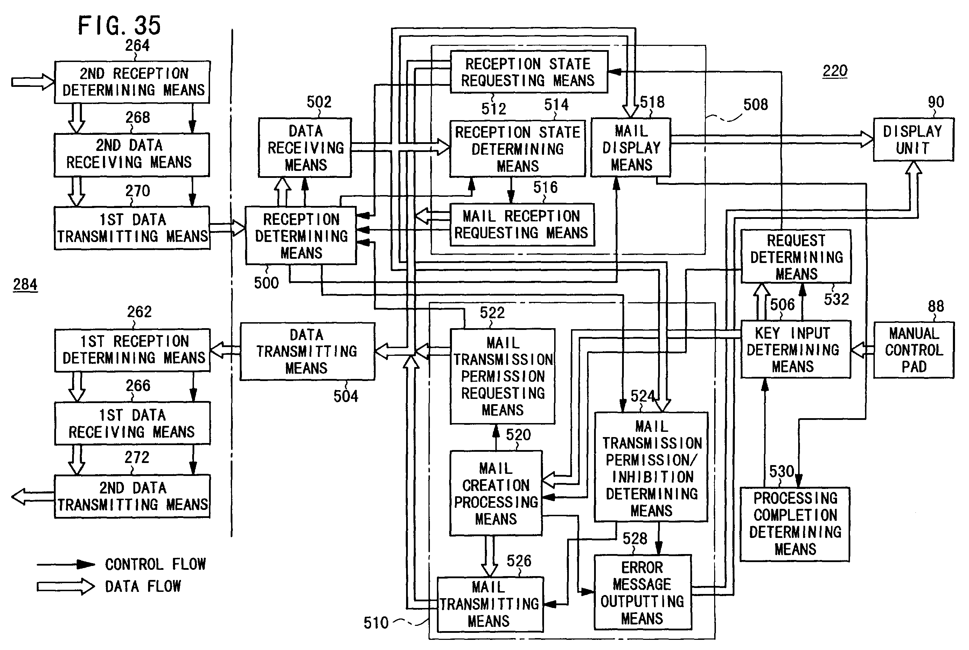

The mail service processing means 220 in the communication processing means 200 in the portable information terminal 18 will be described below with reference to FIGS. 35 through 37.

As shown in FIG. 35, the mail service processing means 220 has a reception determining means 500 for determining whether transmitted data from the computer 16 has been sent to the portable information terminal 18 or not, a data receiving means 502 for receiving transmitted data from the computer 16 and storing the received data in the working memory 140, a data transmitting means 504 for transmitting generated data to the computer 16, a key input detecting means 506 for detecting an input interrupt to the manual control pad 88 and receiving inputted control data, a mail reception processing means 508 for receiving mail if the mail has arrived at the Web site 14, a mail transmission processing means 510 for transmitting mail to the Web site 14, a processing completion determining means 530 for determining an end request for ending a program, and a request determining means 532 for determining a request based on inputted control data.

The mail reception processing means 508 has a reception state requesting means 512 for asking the Web site 14 whether mail has arrived at the Web site 14 or not, a reception state determining means 514 for determining whether mail has arrived at the Web site 14 or not, a mail reception requesting means 516 for requesting the Web site 14 to receive mail, and a mail display means 518 for displaying received mail on the display unit 90.

The mail transmission processing means 510 has a mail creation processing means 520 for creating mail based on control data inputted from the manual control pad 88, a mail transmission permission requesting means 522 for requesting the Web site 14 to permit the transmission of mail, a mail transmission permission/inhibition determining means 524 for determining whether the transmission of mail is permitted or not, a mail transmitting means 526 for transmitting created mail, and an error message outputting means 528 for outputting an error message indicative of the inhibition of mail transmission, etc.

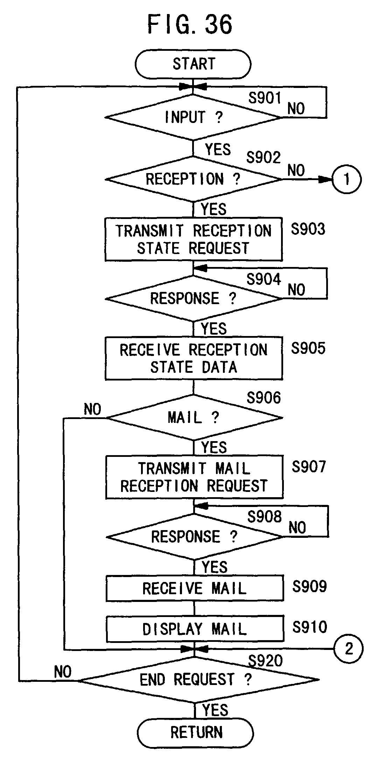

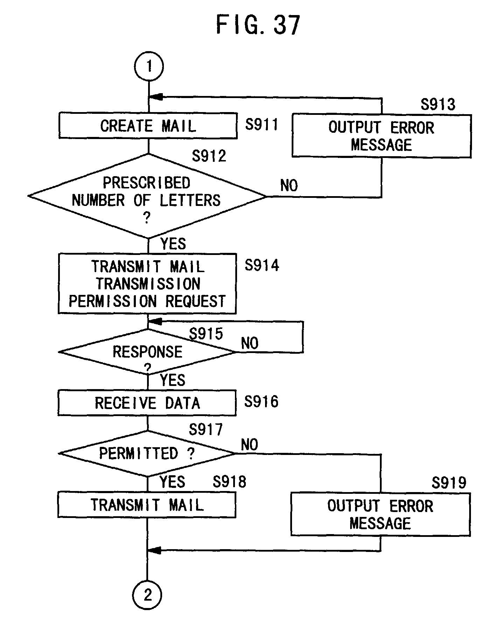

FIGS. 36 and 37 show a processing sequence of the mail service processing means 220.

In step S901 shown in FIG. 36, the key input determining means 506 awaits an input of control data from the manual control pad 88. If control data from the manual control pad 88 is inputted, then control proceeds to step S902 in which the request determining means 532 determines whether the present request of the control data is a mail reception request or not.

If the present request is a mail reception request, then the mail reception processing means 508 performs its own processing. In step S903, the reception state requesting means 512 and the data transmitting means 504 transmit request data to ask the Web site 14 whether mail has arrived at the Web site 14 or not. Thereafter, in step S904, the reception determining means 500 awaits a response from the computer 16.

If there is a response from the computer 16, then control goes to step S905 in which the data receiving means 502 receives data of a reception state, i.e., data indicative of whether new mail has arrived or not.

In step S906, the reception state determining means 514 determines whether new mail has arrived at the Web site 14 or not, based on the received data of the reception state.

If new mail has arrived, then control proceeds to step S907 in which the mail reception requesting means 516 and the data transmitting means 504 transmit data indicative of an intention to receive the new mail. Thereafter, in step S908, the reception determining means 500 awaits a response from the computer 16.

If there is a response from the computer 16, then control proceeds to step S909 in which the data receiving means 502 receives the new mail. Thereafter, in step S910, the mail display means 518 displays the new mail on the display unit 90. The new mail is also stored in the data memory 142, for example.

If the present request is a mail transmission request in step S902, then the mail transmission processing means 510 performs its own processing. In step S911 shown in FIG. 37, the mail creation processing means 520 creates mail based on control data inputted from the manual control pad 88. When mail has been created, control goes to step S912 which determines whether the number of letters contained in the mail is equal to or less than a prescribed number of letters or not. If the number of letters contained in the mail exceeds the prescribed number of letters, then the error message outputting means 528 outputs an error message such as "NUMBER OF LETTERS EXCEEDS PRESCRIBED NUMBER OF LETTERS", for example. Then, control goes back to step S911 to enter the mail creation processing routine.

If the number of letters contained in the mail is equal to or less than the prescribed number of letters in step S912, then the control goes to step S914 in which the mail transmission permission requesting means 522 and the data transmitting means 504 transmits data for requesting permission of the transmission of mail. Thereafter, in step S915, the reception determining means 500 awaits a response from the computer 16.

If there is a response from the computer 16, then control goes to step S916 in which the data receiving means 502 receives mail transmission permission/inhibition data.

In step S917, the mail transmission permission/inhibition determining means 524 determines whether the transmission of mail is permitted or not based on the received mail transmission permission/inhibition data.

If the transmission of mail is permitted, then control goes to step S918 in which the mail transmitting means 526 and the data transmitting means 504 transmit the presently created mail via the computer 16 to the Web site 14.

If the transmission of mail is inhibited in step S917, then control goes to step S919 in which the error message outputting means 528 outputs an error message such as "MAIL CANNOT BE TRANSMITTED AT PRESENT", for example.

After the processing in step S910 shown in FIG. 36, or if there is no received mail in step S906 shown in FIG. 36, or after the processing in step S918 or S919 shown in FIG. 37, control goes to step S920 shown in FIG. 36 in which the processing completion determining means 530 determines whether there is a request to end the processing in the mail service processing means 220 or not. If there is no request to end the processing in the mail service processing means 220, then control returns to step S901 in which an input of control data is awaited. If there is a request to end the processing in the mail service processing means 220, then the processing in the mail service processing means 220 is ended.

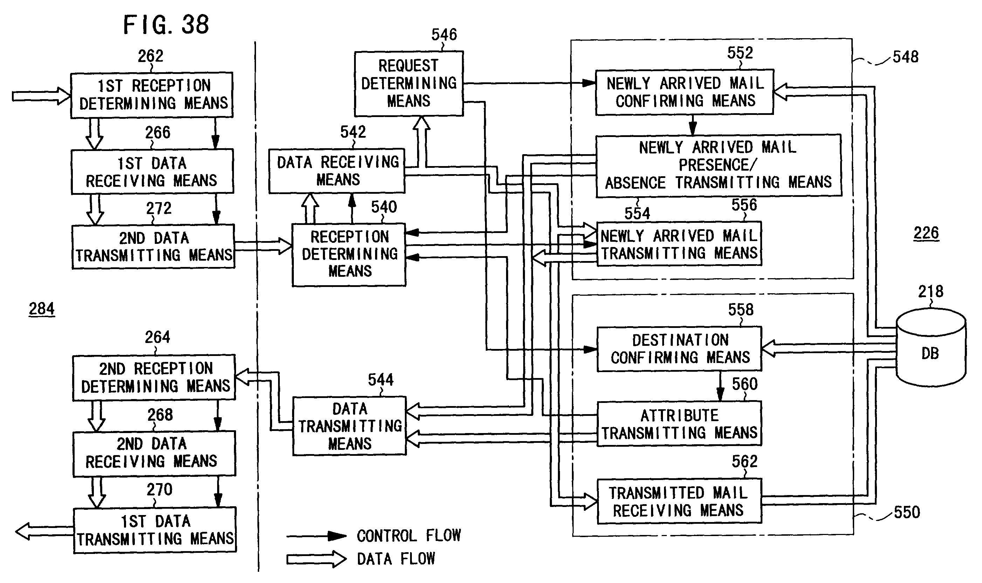

The arrangement and processing sequence of the electronic mail managing means 226 in the Web site 14 will be described below with reference to FIGS. 38 through 40.

As shown in FIG. 38, the electronic mail managing means 226 has a reception determining means 540 for determining whether transmitted data from the computer 16 as the requester has been sent to the Web site 14 or not, a data receiving means 542 for receiving the transmitted data from the computer 16 and storing the received data in a memory (not shown), a data transmitting means 544 for transmitting generated data to the requester, a request determining means 546 for determining whether a request from the requester is a mail reception request or a mail transmission request, a mail transmission processing means 548 for transmitting new mail that has arrived at the user of the requester to the user, and a mail reception processing means 550 for receiving mail from the requester and storing the mail in the mail address (mailbox) of another party in the electronic mail management database 218.

The mail transmission processing means 548 has a newly arrived mail confirming means 552 for confirming whether new mail has arrived at the mailbox of the user of the requester, a newly arrived mail presence/absence transmitting means 554 for transmitting the confined result (presence or absence of mail) to the requester, and a newly arrived mail transmitting means 556 for transmitting newly arrived mail to the requester.

The mail reception processing means 550 has a destination confining means 558 for confirming whether the mail address of the other party is valid or invalid, i.e., whether the mailbox of the other party is established in the electronic mail management database 218 or not, an attribute transmitting means 560 for transmitting data representing the completion of the preparation for transmission or data representing a mail transmission inhibition to the requester, and a transmitted mail receiving means 562 for receiving mail from the requester and storing the received mail in the mailbox of the other party.

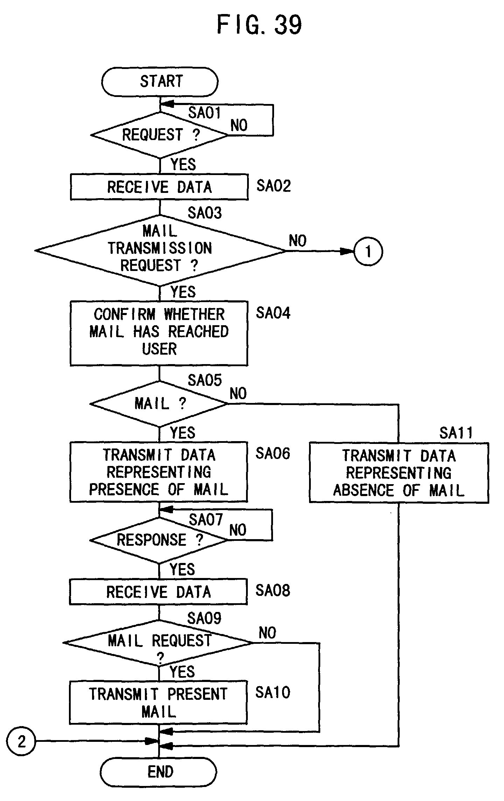

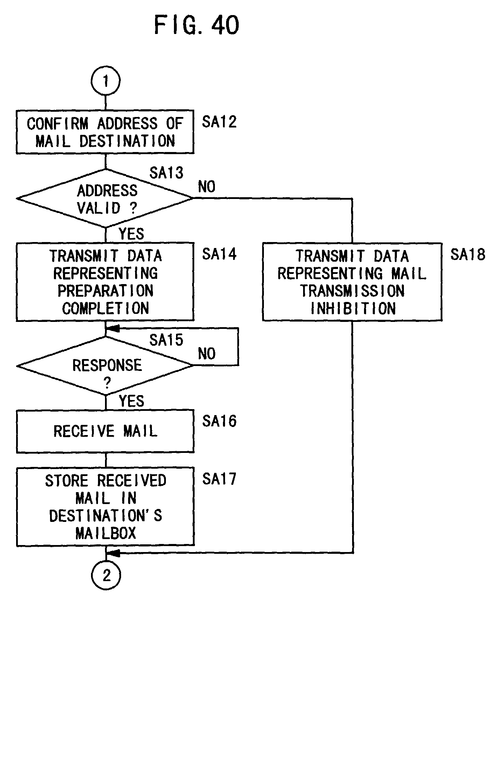

FIGS. 39 and 40 show a processing sequence of the electronic mail managing means 226.

In step SA01 shown in FIG. 39, the reception determining means 540 waits for a mail transmission request or a mail reception request from the requester. The mail transmission request is a request for the transmission of new mail when such new mail for the requester arrives, and the mail reception request is a request for the reception of mail created by the requester in order to send the mail to the other party.

If there is either one of these requests, then control goes to step SA02 in which the data receiving means 542 receives request data from the requester.

In step SA03, the request determining means 546 determines the present request based on the received request data. If the present request is a mail transmission request, then the mail transmission processing means 548 performs its own processing. In step SA04, the newly arrived mail confirming means 552 confirms whether new mail has arrived at the mailbox of the user of the requester.

If there is new mail, then control proceeds to step SA06 in which the newly arrived mail presence/absence transmitting means 554 and the data transmitting means 544 transmits data indicative of the presence of newly arrived mail to the requester. Then, in step SA07, the reception determining means 540 awaits a response from the computer 16.

If there is a response from the computer 16, then control proceeds to step SA08 in which the data receiving means 542 receives response data from the requester. Thereafter, in step SA09, the newly arrived mail transmitting means 556 determines whether the newly arrived mail is requested or not.

If the newly arrived mail is requested, then the newly arrived mail transmitting means 556 and the data transmitting means 544 transmits the present newly arrived mail to the requester in step SA10.

If there is no newly arrived mail in step SA05, then control jumps to step SA11 in which the newly arrived mail presence/absence transmitting means 554 and the data transmitting means 544 transmits data indicative of the absence of newly arrived mail to the requester.

If the present request is a mail reception request in step SA03, then the mail reception processing means 550 performs its own processing. In step SA12 shown in FIG. 40, destination confirming means 558 confirms whether the mail address of the other party is valid or invalid, i.e., whether the mailbox of the other party is established in the electronic mail management database 218 or not.

If the mail address of the other party is valid, then control proceeds to step SA14 in which the attribute transmitting means 560 and the data transmitting means 544 transmits data representing the completion of preparation to the requester. In step SA15, the reception determining means 540 awaits a response from the computer 16.

If there is a response from the computer 16, then control goes to step SA16 in which the data receiving means 542 receives mail from the requester. Thereafter, in step SA17, the transmitted mail receiving means 562 stores the received mail as newly arrived mail in the mail box of the other party (destination) in the electronic mail management database 218.

If the mail address of the other party is invalid in step SA13, then control goes to step SA18 in which the attribute transmitting means 560 and the data transmitting means 544 transmits data representing the inhibition of mail transmission to the requester.

After the processing in step SA10 or SA11 shown in FIG. 39, or the processing in step SA17 or SA18 shown in FIG. 40, the processing in the electronic mail managing means 226 is ended.

As described above, the communication system 10 according to the present invention has the Web site 14 connected to the network 12, the computer 16 capable of accessing the Web site 14 via the network 12, and the portable information terminal 18 capable of performing wireless communication with the computer 16, the portable information terminal 18 and the Web site 14 being capable of communicating with each other via the computer 16.

Heretofore, as shown in FIG. 41, for downloading a desired program and data 1008 from the Web site 1006 via the computer 1000 into the portable information terminal 1002, it is customary to download the downloading tool 1010 into the computer 1000 and thereafter use the downloading tool 1010 to download the desired program and data 1008 downloaded from the Web site 1006 into the portable information terminal 1002.

According to the preferred embodiments of the present invention, since the portable information terminal 18 and the Web site 14 are capable of communicating with each other via the computer 16, the computer 16 simply functions as a data buffer or a data converter, making the communication process equivalent to downloading the desired program and data from the Web site 14 directly into the portable information terminal 18.

Therefore, any process of writing a downloading tool from the Web site 14 into a hard disk, for example, of the computer 16 is not required, and it is not necessary to activate a downloading tool to download a desired program and data into the portable information terminal 18. Consequently, the period of time required to download a desired program and data from the Web site 14 into the portable information terminal 18 is greatly reduced.

It is also not required to reserve an area in the hard disk to write a downloading tool therein.

Inasmuch as a desired program and data are downloaded from the Web site 14 directly into the portable information terminal 18, the portable information terminal 18 can receive the desired program and data as an HTML document, which makes it possible to easily change the design of a menu image, for example, displayed on the display unit 90. As a result, the user interface can be improved.

Heretofore, if the downloading tool 1010 malfunctions or its version is updated, then it needs to be redistributed. According to embodiments of the present invention, however, such drawbacks are completely eliminated because no downloading tool needs to be downloaded into the computer 16.

Moreover, as the computer 16 only functions as a data buffer or a data converter for communications, the downloading of a desired program and data does not depend on the OS of the computer 16, and hence the dependency of the downloading on the computer type is eliminated.

Although a certain preferred embodiment of the present invention has been shown and described in detail, it should be understood that various changes and modifications may be made therein without departing from the scope of the invention.

## Claims

1. A communication system comprising:
a network (12);
a server (14) connected to said network (12);
a computer (16) capable of accessing said server (14) via said network (12); and
a portable information terminal (18) capable of performing wireless communication with said computer (16);
said portable information terminal (18) and said server (14) being capable of communicating with each other via said computer (16).

2. A communication system according to claim 1, wherein said network (12) comprises the Internet, and said server (14) comprises a Web site.

3. A communication system according to claim 1 or 2, wherein said portable information terminal (18) and said computer (16) communicate with each other via an infrared radiation.

4. A communication system according to any one of claims 1 to 3, wherein said computer (16) has a main memory (20), and said portable information terminal (18) and said server (14) communicate with each other using said main memory (20) as a data buffer.

5. A communication system according to any one of claims 1 to 4, further comprising:
an entertainment apparatus (32) capable of executing a plurality of programs, said portable information terminal (18) having communication processing means (200) for processing communications, downloaded via said entertainment apparatus (32).

6. A communication system according to claim 5, wherein said communication processing means (200) has user information processing means (212) for registering user information stored in a memory (142) of said portable information terminal (18) in a database (210) managed by said server (14) and/or retrieving user information from said database (21).

7. A communication system according to claim 5 or 6, wherein said server (14) has a database (214) with a plurality of programs registered therein, and said communication processing means (200) has program loading means (216) for downloading a program from the programs registered in said database (214).

8. A communication system according to any one of claims 5 to 7, wherein said server (14) has a database (218) with individual addresses established therein, and said communication processing means (200) has electronic mail service processing means (220) for exchanging electronic mail with the individual addresses established in said database (218).

9. A communication system according to any one of claims 5 to 8, wherein said entertainment apparatus (32) has terminal utility processing means (202) for downloading at least the communication processing means (200) recorded in a recording medium (40) into said portable information terminal (18).

10. A communication system according to any one of claims 1 to 9, wherein said computer (16) has communication preparing means (204) for preparing communications between said portable information terminal (18) and said server (14).

11. A communication system according to claim 10, wherein said computer (16) has a main memory (20), and said communication preparing means (204) comprises means for reserving a memory area for communications in said main memory (20).

12. A method of performing communications between a portable information terminal (18) capable of performing wireless communication with a computer (16) and a server (14) connected to a network (12), via said computer (16).

13. A method according to claim 12, wherein said network (12) comprises the Internet, and said server (14) comprises a Web site.

14. A method according to claim 12 or 13, wherein said portable information terminal (18) and said computer (16) communicate with each other via an infrared radiation.

15. A method according to any one of claims 12 to 14, wherein said computer (16) has a main memory (20), and said portable information terminal (18) and said server (14) communicate with each other using said main memory (20) as a data buffer.

16. A method according to any one of claims 12 to 15, wherein communication processing means (200) for processing said communications is downloaded into said portable information terminal (18) via an entertainment apparatus (32).

17. A method according to claim 16, wherein said communication processing means (200) executes a process of registering user information stored in a memory (142) of said portable information terminal (18) in a database (210) managed by said server (14) and/or retrieving user information from said database (21).

18. A method according to claim 16 or 17, wherein said communication processing means (200) executes a process of downloading a program from a plurality of programs registered in a database (214) of said server (14).

19. A method according to any one of claims 16 to 18, wherein said communication processing means (200) executes a process of exchanging electronic mail with individual addresses established in a database (218) of said server (14).

20. A method according to any one of claims 16 to 19, wherein said entertainment apparatus (32) downloads at least the communication processing means (200) recorded in a recording medium (40) into said portable information terminal (18).

21. A method according to any one of claims 12 to 20, wherein said computer (16) prepares communications between said portable information terminal (18) and said server (14).

22. A method according to claim 21, wherein said computer (16) prepares communications between said portable information terminal (18) and said server (14) by reserving a memory area for communications in a main memory (20) of said computer (16).

23. A recording medium which stores a program for performing communications between a portable information terminal (18) capable of performing wireless communication with a computer (16) and a server (14) connected to a network (12), via said computer (16).

24. A recording medium according to claim 23, wherein said program is arranged to allow said network (12) to comprise the Internet, and said server (14) to comprise a Web site.

25. A recording medium according to claim 23 or 24, wherein said program is arranged to allow said portable information terminal (18) and said computer (16) to communicate with each other via an infrared radiation.

26. A recording medium according to any one of claims 23 to 25, wherein said computer (16) has a main memory (20), and said program is arranged to allow said portable information terminal (18) and said server (14) to communicate with each other using said main memory (20) as a data buffer.

27. A recording medium according to any one of claims 23 to 26, wherein said program is arranged to allow communication processing means (200) for processing said communications to be downloaded into said portable information terminal (18) via an entertainment apparatus (32).

28. A recording medium according to claim 27, wherein said communication processing means (200) executes a process of registering user information stored in a memory (142) of said portable information terminal (18) in a database (210) managed by said server (14) and/or retrieving user information from said database (21).

29. A recording medium according to claim 27 or 28, wherein said communication processing means (200) executes a process of downloading a program from a plurality of programs registered in a database (214) of said server (14).

30. A recording medium according to any one of claims 27 to 29, wherein said communication processing means (200) executes a process of exchanging electronic mail with individual addresses established in a database (218) of said server (14).

31. A recording medium according to any one of claims 23 to 30, wherein said program is arranged to allow said computer (16) to prepare communications between said portable information terminal (18) and said server (14).

32. A recording medium according to claim 31, wherein said computer (16) prepares communications between said portable information terminal (18) and said server (14) by reserving a memory area for communications in a main memory (20) of said computer (16).

33. A program which is used in a communication system (10) having a network (12), a server (14) connected to said network (12), a computer (16) capable of accessing said server (14) via said network (12), and a portable information terminal (18) capable of performing wireless communication with said computer (16), and which is readable and executable by a plurality of computers, said program having the step of:
performing communications between said portable information terminal (18) and said server (14) via said computer (16).
